# EUROPEAN PATENT APPLICATION

(11) **EP 1 959 256 A1**
(43) Date of publication of application: **20.08.2008**
(21) Application number: 06823408.7
(22) Date of filing: 15.11.2006
(51) Int. Cl.: G01N 35/02

(54) **REACTION VESSEL AND ANALYZER**

(30) Priority: 08.12.2005 JP 2005355238; 08.12.2005 JP 2005355239
(71) Applicant: Olympus Corporation, Tokyo 151-0072 (JP)
(72) Inventor: MURAKAMI, Miyuki, 43-2, Hatagaya 2-chome (JP)
(74) Representative: von Hellfeld, Axel
(86) International application number: PCT/JP2006/322754
(87) International publication number: WO 2007/066478

(57) **Abstract**

A reaction vessel (6) and an analyzer (1) comprising a dispensing holding unit for holding a dispensed liquid, and a light measuring holding unit for holding the liquid conveyed from the dispensing holding unit, and having at least one set of parallel light transmission surfaces opposing to each other for constantly defining a light path length of light, which measures optical characteristics of the liquid, in which the dispensing holding unit and the light measuring holding units are formed on positions different from each other. The analyzer (1) is provided with dispensing units (2, 3) for dispensing the liquid to the dispensing holding unit formed in the vessel (6), and a light measuring unit (9) for measuring optical characteristics of the liquid held in the light measuring holding unit to which the stirred liquid is conveyed, the position of which in the vessel is different from that of the dispensing holding unit.

## Description

### TECHNICAL FIELD

The present invention relates to a reaction vessel and an analyzer.

### BACKGROUND ART

Conventionally, the analyzer stirs a specimen and a reagent dispensed in the reaction vessel, and analyzes a constituent concentration or the like by optically analyzing a reaction liquid reacted by stirring (for example, refer to Patent Document 1).

Patent Document 1: Japanese Patent No. 3168886,

### Specification

### DISCLOSURE OF INVENTION

### PROBLEM TO BE SOLVED BY THE INVENTION

Meanwhile, in the reaction vessel, when the volume of the liquid to be analyzed becomes minute because the volume of the specimen becomes minute for reducing strain of patients and the volume of the reagent becomes minute for reducing an analytical cost, the vessel itself becomes minute accordingly. However, when the conventional reaction vessel is made simply minute and is used as the reaction vessel of the analyzer, there has been a case that the analysis of the liquid could not be performed correctly.

The present invention is made in consideration of the above-described problems, and an aim of the present invention is to provide the reaction vessel and the analyzer enabling an analysis correct and excellent in reliability when the volume of the liquid to be analyzed becomes minute.

### MEANS FOR SOLVING PROBLEM

To solve the problem and achieve the object, a reaction vessel according to an aspect of the present invention includes a dispensing holding unit for holding a dispensed liquid; and a light measuring holding unit for holding the liquid conveyed from the dispensing holding unit, and having at least one set of parallel light transmission surfaces opposing to each other for constantly defining a light path length of light, the light path length being used for measuring optical characteristics of the liquid, wherein the dispensing holding unit and the light measuring holding unit are formed on positions different from each other.

According to the reaction vessel of an aspect of the present invention, in the above invention, the dispensing holding unit is a region other than a region on which the light measuring holding unit is formed in the reaction vessel.

According to the reaction vessel of an aspect of the present invention, in the above invention, the light measuring holding unit has an opening through which the liquid pass when the liquid is introduced and delivered, and an area of the dispensing holding unit is larger than an area of the opening.

According to the reaction vessel of an aspect of the present invention, in the above invention, relative positions of the dispensing holding unit and the light measuring holding unit are fixed.

According to the reaction vessel of an aspect of the present invention, in the above invention, the dispensing holding unit and the light measuring holding unit come into contact with each other.

According to the reaction vessel of an aspect of the present invention, in the above invention, the light measuring holding unit is enclosed by the dispensing holding unit.

According to the reaction vessel of an aspect of the present invention, in the above invention, the dispensing holding unit and the light measuring holding unit move relative to each other, and come into contact with each other when optical characteristics of the liquid is measured.

To solve the problem and achieve the object, an analyzer according to an aspect of the present invention is for stirring a liquid held in a vessel by a sound wave and measuring optical characteristics of the liquid which has been stirred, to analyze the liquid, and includes a dispensing unit for dispensing the liquid to a dispensing holding unit formed in the vessel; and a light measuring unit for measuring optical characteristics of the liquid held in a light measuring holding unit to which the liquid which has been stirred is conveyed, a position of the light measuring unit in the vessel being different from a position of the dispensing holding unit.

The analyzer of an aspect of the present invention, in the above invention, further includes a conveying unit for conveying the liquid in the vessel.

According to the analyzer of an aspect of the present invention, in the above invention, the conveying unit conveys the liquid held in the dispensing holding unit to the light measuring holding unit.

According to the analyzer of an aspect of the present invention, in the above invention, the conveying unit conveys all the liquid held in the dispensing holding unit to the light measuring holding unit.

According to the analyzer of an aspect of the present invention, in the above invention, the conveying unit conveys the liquid held in the light measuring holding unit to the dispensing holding unit.

According to the analyzer of an aspect of the present invention, in the above invention, the conveying unit conveys the liquid by means of a sound wave.

According to the analyzer of an aspect of the present invention, in the above invention, the conveying unit is a surface acoustic wave device.

According to the analyzer of an aspect of the present invention, in the above invention, the surface acoustic wave device also serves as a stirring unit for stirring the liquid.

According to the analyzer of an aspect of the present invention, in the above invention, in the vessel, a surface contacting the liquid at the time of dispensing, conveying and measuring light of the liquid has an affinity for the liquid, which is higher than an affinity of a surface other than a portion which the liquid contacts.

### EFFECT OF THE INVENTION

The reaction vessel of the present invention is characterized in being provided with a dispensing holding unit for holding a dispensed liquid and a light measuring holding unit for measuring light of the liquid, formed on different positions. Also, the analyzer of the present invention is characterized in being provided with dispensing means for dispensing the liquid to the dispensing holding unit formed in the vessel and light measuring means for measuring optical characteristics of the liquid held in the light measuring holding unit of which position is different from that of the dispensing holding unit. Therefore, the reaction vessel and the analyzer of the present invention have an effect that they may perform an analysis correct and excellent in reliability even when the volume of the liquid to be analyzed becomes minute.

### BRIEF DESCRIPTION OF DRAWINGS

FIG. 1 is a block diagram showing a configuration of an automatic analyzer of the present invention with a cross-sectional surface of a reaction table;
FIG. 2 is a perspective view showing a schematic configuration of a reaction vessel used in the automatic analyzer of FIG. 1 together with a stirring unit;
FIG. 3 is a perspective view of the reaction vessel of FIG.2, showing a state in which a first reagent is dispensed;
FIG. 4 is a perspective view of the reaction vessel of FIG. 2, showing a state in which the dispensed first reagent is conveyed toward a holding member in a liquid drop state;
FIG. 5 is a perspective view of the reaction vessel of FIG. 2, showing a state in which light of the first reagent held in a light measuring holding unit is measured;
FIG. 6 is a cross-sectional view of the reaction vessel, showing a state in which light of the first reagent held in the light measuring holding unit is measured;
FIG. 7 is a perspective view of the reaction vessel of FIG. 2, showing a state in which a specimen is dispensed and the first reagent held in the light measuring holding unit is conveyed to a liquid drop merging unit;
FIG. 8 is a perspective view of the reaction vessel of FIG. 2, showing a merged liquid of the specimen and the first reagent merged at the liquid drop merging unit;
FIG. 9 is a perspective view of the reaction vessel of FIG. 2, showing a state in which a mixed liquid obtained by stirring the specimen and the first reagent is conveyed on a stirring holding unit toward the holding member;
FIG. 10 is a perspective view of the reaction vessel of FIG. 2, showing a state in which the mixed liquid of the specimen and the first reagent conveyed to the holding member is held in the light measuring holding unit;
FIG. 11 is a cross-sectional view of the reaction vessel, showing a state in which the mixed liquid of the specimen and the first reagent conveyed to the holding member is held in the light measuring holding unit;
FIG. 12 is a perspective view of the reaction vessel of FIG. 2, showing a state in which light of the mixed liquid held in the light measuring holding unit is measured;
FIG. 13 is a perspective view of the reaction vessel of FIG. 2, showing a state in which a second reagent is dispensed and the mixed liquid held in the light measuring holding unit is conveyed to the liquid drop merging unit;
FIG. 14 is a perspective view of the reaction vessel of FIG. 2, showing a merged liquid of the mixed liquid and the second reagent merged at the liquid drop merging unit;
FIG. 15 is a perspective view of the reaction vessel of FIG. 2, showing a state in which the mixed liquid obtained by stirring the merged liquid of the second reagent is conveyed on the stirring holding unit toward the holding member;
FIG. 16 is a perspective view of the reaction vessel of FIG. 2, showing a state in which the mixed liquid of the second reagent is held in the light measuring holding unit;
FIG. 17 is a cross-sectional view of the reaction vessel, showing a state in which the mixed liquid of the second reagent conveyed to the holding member is held in the light measuring holding unit;
FIG. 18 is a perspective view of the reaction vessel of FIG. 2, showing a state in which light of the mixed liquid of the second reagent held in the light measuring holding unit is measured;
FIG. 19 is a block diagram showing a modified example of the automatic analyzer of the first embodiment;
FIG. 20 is a perspective view showing a state in which light of the liquid held in the light measuring holding unit is measured in the reaction vessel of the automatic analyzer shown in FIG. 19;
FIG. 21 is a perspective view of the reaction vessel of FIG. 2, showing a modified example of a circuit configuration of a surface acoustic wave device in the automatic analyzer of the first embodiment;
FIG. 22 is a schematic configuration diagram showing an automatic analyzer of a second embodiment;
FIG. 23 is an enlarged perspective view showing a portion of a reaction wheel of the automatic analyzer shown in FIG. 22;
FIG. 24 is a perspective view of the surface acoustic wave device;
FIG. 25 is a view showing a schematic configuration of a drive device in the automatic analyzer together with an enlarged plane view of a portion of the surface acoustic wave device;
FIG. 26 is an enlarged plane view of a portion of the reaction wheel abutting an upper surface of the surface acoustic wave device;
FIG. 27 is a cross-sectional view taken along a line C-C of the reaction wheel shown in FIG. 26;
FIG. 28 is a cross-sectional view showing a state in which the reaction wheel is raised and lowered and isolated from the surface acoustic wave device;
FIG. 29 is a cross-sectional view of the surface acoustic wave device, showing a state in which the first reagent is dispensed to each of the dispensing holding unit (stirring holding unit);
FIG. 30 is a cross-sectional view of the surface acoustic wave device, showing a state in which the specimen is dispensed to the first reagent in each of the dispensing holding unit (stirring holding unit);
FIG. 31 is a cross-sectional view of the surface acoustic wave device, showing a state in which the first reagent and the specimen are stirred;
FIG. 32 is a cross-sectional view of the surface acoustic wave device, showing a state in which the reaction wheel is lowered on the surface acoustic wave device holding the mixed liquid obtained by stirring the first reagent and the specimen;
FIG. 33 is a cross-sectional view showing a state in which the mixed liquid of the first reagent and the specimen is held in each of the light measuring holding units of the reaction wheel abutting the upper surface of the surface acoustic wave device;
FIG. 34 is a cross-sectional view showing a state in which light of the mixed liquid of the first reagent and the specimen held in each of the light measuring holding units is measured;
FIG. 35 is a cross-sectional view showing a state in which the reaction wheel is isolated from the surface acoustic wave device and the mixed liquid of the first reagent and the specimen is returned to the dispensing holding unit (stirring holding unit) of the surface acoustic wave device;
FIG. 36 is a cross-sectional view of the surface acoustic wave device, showing a state in which the second reagent is dispensed to the mixed liquid;
FIG. 37 is a cross-sectional view of the surface acoustic wave device, showing a state in which the mixed liquid and the second reagent held on the dispensing holding unit (stirring holding unit) are stirred;
Fig 38 is a cross-sectional view of the surface acoustic wave device, showing a state in which the reaction wheel is lowered on the surface acoustic wave device holding the mixed liquid of the stirred second reagent;
FIG. 39 is a cross-sectional view, showing a state in which the mixed liquid of the second reagent is held in each of the light measuring holding units of the reaction wheel abutting the upper surface of the surface acoustic wave device;
FIG. 40 is a cross-sectional view showing a state in which light of the mixed liquid of the second reagent held in each of the light measuring holding units is measured;
FIG. 41 is a cross-sectional view showing a state in which the second reagent is dispensed from above of each of the light measuring holding units to the mixed liquid held by the reaction wheel and the surface acoustic wave device, for illustrating a modified example regarding the analysis of the specimen;
FIG. 42 is a cross-sectional view of the reaction wheel and the surface acoustic wave device, showing a state in which the mixed liquid to which the second reagent is dispensed is stirred;
FIG. 43 is a cross-sectional view of the reaction wheel and the surface acoustic wave device, showing a state in which light of the stirred mixed liquid is measured;
FIG. 44 is a view showing a schematic configuration of the drive unit in the automatic analyzer together with an enlarged plane view of a portion of a thickness-extensional vibrator, which is sound wave generating means;
FIG. 45 is a cross-sectional view of the thickness-extensional vibrator shown in FIG. 44;
FIG. 46 is a schematic configuration diagram of the automatic analyzer according to a third embodiment of the present invention;
FIG. 47 is an enlarged view of an A portion of the automatic analyzer shown in FIG. 46;
FIG. 48 is a front view of the surface acoustic wave device used in the reaction vessel;
FIG. 49 is a cross-sectional view showing a shape in the stirring holding unit of the liquid dispensed in the reaction vessel; and
FIG. 50 is a cross-sectional view showing a shape after the dispensed liquid is conveyed from the stirring holding unit to the light measuring holding unit.

### EXPLANATIONS OF LETTERS OR NUMERALS

- 1: Automatic analyzer
- 2: Specimen dispensing unit
- 3: Reagent dispensing unit
- 4: Reaction table
- 4a: Holder
- 5: Drive motor
- 6: Reaction vessel
- 7: Surface acoustic wave device
- 8: Holding member
- 9: Light measuring unit
- 10: Control unit
- 11: Stirring unit
- 12: Drive unit
- 13: Switch
- 20: Automatic analyzer
- 21: Operation table
- 22: Specimen table
- 23: Specimen vessel
- 24: Specimen dispensing mechanism
- 25: Reaction wheel
- 25a: Light measuring holding unit
- 26: Measuring optical unit
- 27: Discharger
- 28: Reagent dispensing mechanism
- 29: Reagent table
- 30: Reagent vessel
- 31: Reader
- 32: Control unit
- 33: Analyzing unit
- 34: Input unit
- 35: Display unit
- 40: Stirrer
- 41: Surface acoustic wave device
- 42: Constant temperature plate
- 43: Drive device
- 44: Lifting mechanism
- 50: Automatic analyzer
- 51, 52: Reagent table
- 53: Reaction unit
- 54: Reaction vessel
- 54d: Opening
- 55, 56: Reagent dispensing mechanism
- 57: Specimen vessel transferring mechanism
- 58: Feeder
- 59: Rack
- 60: Specimen dispensing mechanism
- 61: Analytical optical system
- 62: Cleaning mechanism
- 64: Control unit
- 65: Input unit
- 66: Display unit
- 70: Drive unit
- 72: Surface acoustic wave device
- 71: Electrical transmitter
- Op: Opening
- Pb: Dispensing holding unit
- Pp: Light measuring holding unit
- Ps: Stirring holding unit
- Pu: Liquid drop merging unit

### BEST MODE(S) FOR CARRYING OUT THE INVENTION

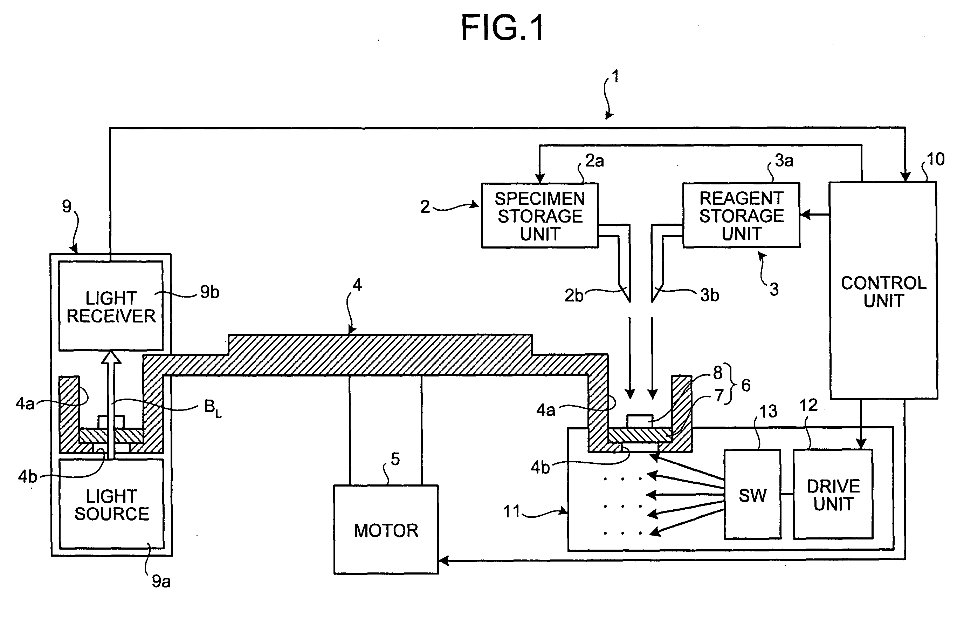

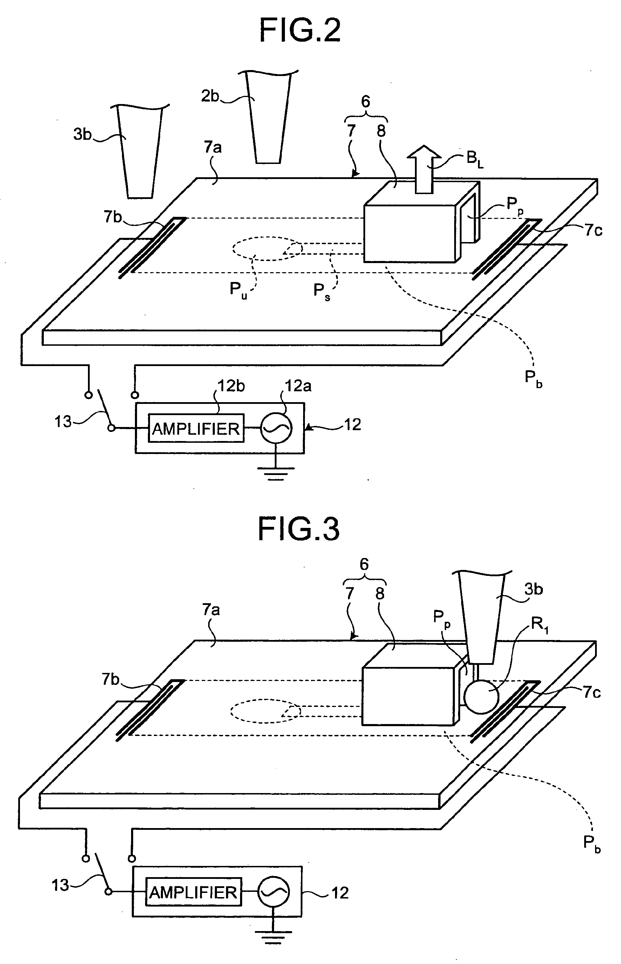

(First Embodiment)
Hereinafter, a first embodiment of a reaction vessel and an analyzer according to the present invention will be described in detail with reference to the drawings. FIG. 1 is a block diagram showing a configuration of an automatic analyzer of the present invention with a cross-sectional surface of a reaction table. FIG. 2 is a perspective view showing a schematic configuration of the reaction vessel used in the automatic analyzer of FIG. 1 together with a stirring unit.

An automatic analyzer 1 is provided with a specimen dispensing unit 2, a reagent dispensing unit 3, a reaction table 4, a light measuring unit 9, a control unit 10 and a stirring unit 11, as shown in FIG. 1.

The specimen dispensing unit 2 dispenses a specimen contained in a specimen storage unit 2a from a specimen nozzle 2b to a reaction vessel 6. The reagent dispensing unit 3 dispenses a reagent contained in a reagent storage unit 3a from a reagent nozzle 3b to the reaction vessel 6. The specimen dispensing unit 2 and the reagent dispensing unit 3 are individually driven by driving means and move above the reaction vessel 6 in a two-dimensional direction along a surface of the reaction vessel 6.

The reaction table 4 is rotated by a drive motor 5 in a direction indicated by an arrow, as shown in FIG. 1, and a plurality of concavely shaped holders 4a arranged along a peripheral direction are disposed on an outer periphery thereof. In each holder 4a, a light measuring window 4b is formed on the center portion of a bottom wall, and the reaction vessel 6 is detachably contained therein.

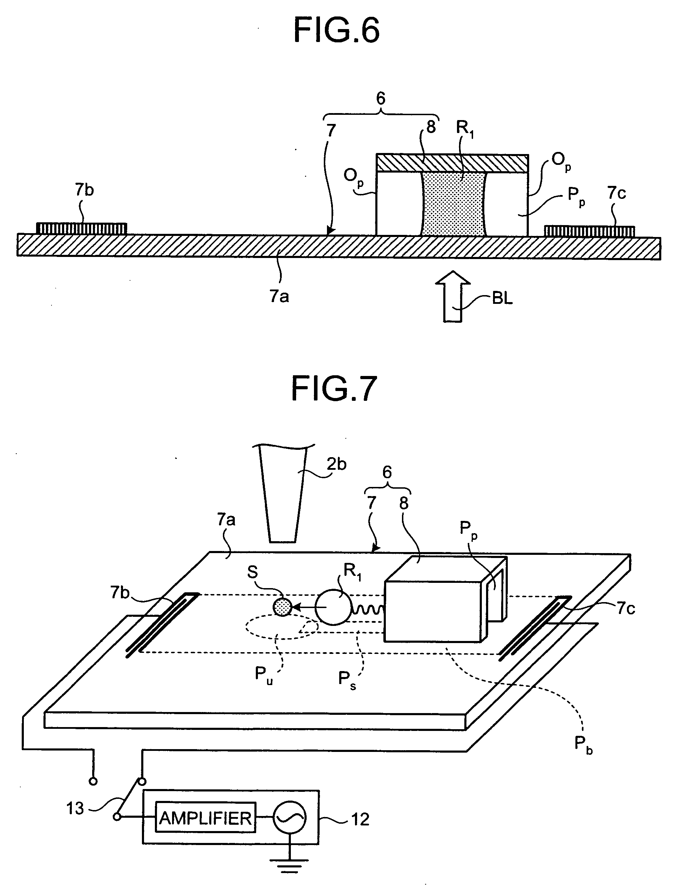

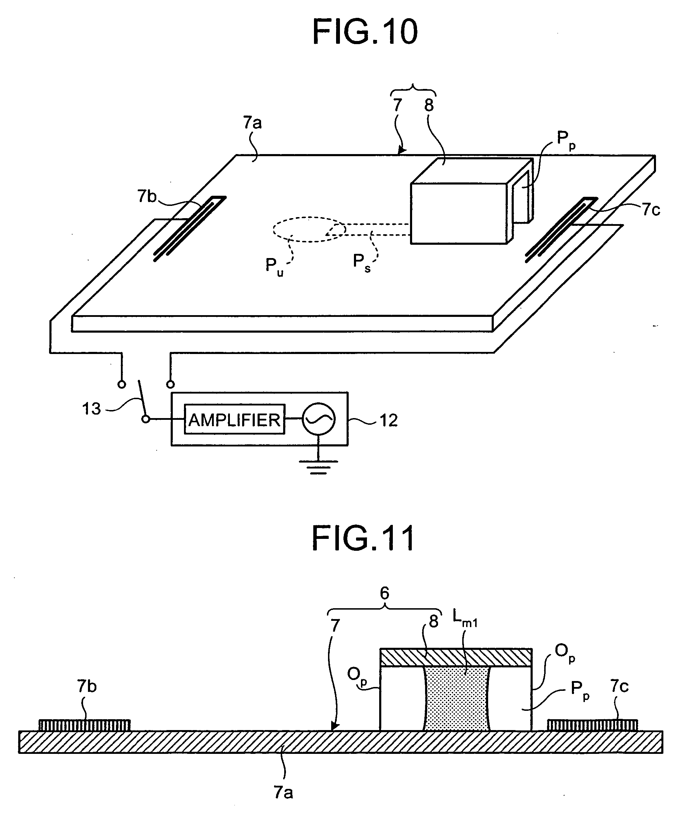

The reaction vessel 6 is a transparent vessel of a so-called Lab-on-a-chip type, and forms a light measuring holding unit Pp by a surface acoustic wave device 7 and a holding member 8, for holding a liquid, as shown in FIG. 2. In the light measuring holding unit Pp, both side portions of the holding member 8 become openings Op (refer to FIGS. 6 and 11) opposing to each other to hold a minute volume of liquid of which volume is a few nL to several tens of µL. Herein, in the reaction vessel 6, a treatment to provide liquid affinity to an upper surface of the surface acoustic wave device 7 and an inner surface of the holding member 8 forming the light measuring holding unit Pp is performed, in order to allow an easier introduction of the liquid into the light measuring holding unit Pp.

The surface acoustic wave device 7 is stirring means for conveying the liquid by a sound wave (surface acoustic wave) to introduce into or draw from the light measuring holding unit Pp and for stirring the liquid, and, as shown in FIG. 2, transducers 7b an 7c made of an interdigital transducer (IDT) are arranged on a piezoelectric substrate 7a so as to be opposed to each other with the holding member 8 interposed therebetween, and are driven by a drive unit 12 connected through a switch 13. At this time, in FIG. 2, the transducer 7b arranged on a left side of the holding member 8 has a liquid conveying and stirring functions, and the transducer 7c arranged on a right side of the holding member 8 has the liquid conveying function respectively. Herein, on a sound wave propagation path including the transducers 7b and 7c on a surface of the piezoelectric substrate 7a, and other than the light measuring holding unit Pp interposed between the transducers 7b and 7c is a dispensing holding unit Pb, and the reagent or the specimen is dispensed to the dispensing holding unit Pb. Also, an area of the dispensing holding unit Pb formed on the surface of the piezoelectric substrate 7a is shaped so as to be larger than an area of the opening Op. In the piezoelectric substrate 7a, a non-affinity treatment for liquid such as specimen and reagent is performed on the surface thereof, and by using a transparent material such as crystal, lithium niobate, (LiNbO₃ and lithium tantalite (LiTaO₃), a portion on which the holding member 8 is arranged is used as a light measuring region.

In addition, on a position other than the light measuring holding unit Pp on the piezoelectric substrate 7a, as shown in FIG. 2, a liquid drop merging unit Pu is formed by performing the affinity treatment for liquid such as specimen and reagent in a circular region, which is enclosed by a broken line, located midway between the transducer 7b and the holding member 8 on the surface, and a stirring holding unit Ps is formed by performing similar treatment to a narrow rectangular region, which is enclosed by the broken line, located midway between the liquid drop merging unit Pu and the holding member 8. Therefore, the liquid held on the stirring holding unit Ps has a tendency to be a liquid drop due to the non-affinity of a surrounding region, and an area of a gas-liquid interface thereof becomes larger than a gas-liquid interface of the liquid held in the light measuring holding unit Pp at the time of measuring light. Herein, in the piezoelectric substrate 7a, the light measuring holding unit Pp may be enclosed by the stirring holding unit Ps, when the area of the gas-liquid interface of the liquid held on the stirring holding unit Ps becomes larger than the gas-liquid interface of the liquid held in the light measuring holding unit Pp at the time of measuring light.

The holding member 8 is formed of a transparent material into a channel-shape, and is arranged between the stirring holding unit Ps and the transducer 7c on the surface of the piezoelectric substrate 7a, as shown in FIG. 2. Therefore, the light measuring holding unit Pp is formed on a position different from that of the dispensing holding unit Pb, and in the reaction vessel 6, a region on the sound wave propagation path other than that on which the light measuring holding unit Pp is formed becomes the dispensing holding unit Pb. Also, when measuring light of the liquid, a thickness in a light transmission direction of the held liquid, that is to say, a light path length is constantly defined. Further, the light measuring holding unit Pp is enclosed by the dispensing holding unit Pb, and is formed so as to be in contact with the dispensing holding unit Pb. Therefore, in the first embodiment, relative positions of the light measuring holding unit Pb and the dispensing holding unit Pb are fixed to each other.

The light measuring unit 9 is light measuring means disposed on opposing positions in a vertical direction with a holder 4a interposed therebetween, as shown in FIG. 1, and has a right source 9a for emitting an analytical light (340 to 800 nm) to analyze the liquid held in the light measuring holding unit Pp of the reaction vessel 6, and a light receiver 9b for dispersing the analytical light, which penetrates the liquid, to receive. Herein, the reaction vessel 6 of which light measurement in the light measuring unit 9 has been finished is transferred to a cleaner to be cleaned, and is used again for analyzing another specimen.

A control unit 10 is connected to the specimen dispensing unit 2, the reagent dispensing unit 3, the drive motor 5, the light measuring unit 9 and the drive unit 12, as shown in FIG. 1, and a micro computer or the like incorporating a memory and a timer, for storing an analytical result, is used. The control unit 10 controls operations of each unit of the automatic analyzer 1 to analyze a constituent concentration or the like of the specimen based on information of a transmitted light output from the light receiver 9b. In addition, the control unit 10 is provided with an input unit such as a keyboard and a mouse for performing an operation of inputting an inspection item or the like, and a display panel for displaying an analytical content and an alert, and the like.

Herein, when controlling the drive unit 12, the control unit 10 controls, for example, characteristics (frequency, intensity, phase, characteristics of wave), wave patterns (sine wave, triangle wave, rectangular wave, burst wave, or the like) or modulations (amplitude modulation, frequency modulation) or the like of the sound wave generated by the surface acoustic wave device 7. Also, the control unit 10 may change the frequency of an oscillation signal oscillated by an oscillator 12a according to the incorporated timer. Further, when turning on and off the transducers 7b and 7c by a switch 13, for example, the control unit 10 measures a time required for conveying to send the liquid from the liquid drop merging unit Pu to the light measuring holding unit Pp or for discharging the liquid from the light measuring holding unit Pp to convey to the liquid drop merging unit Pu, in advance based on a set of operations, and turns on and off the switch 13 based on the time.

The stirring unit 11 is a portion for stirring the liquid held in the reaction vessel 6 by driving the surface acoustic wave device 7, under the control by the control unit 10, and has the drive unit 12 and the switch 13, as shown in FIG. 1.

The drive unit 12 is provided with an oscillator 12a and an amplifier 12b, as shown in FIG. 2. The oscillator 12a has an oscillating circuit capable of programmably changing the oscillation frequency based on the control signal from the control unit 10, and outputs a high-frequency oscillation signal of about several tens of MHz to several hundreds of MHz to the amplifier 12b. The amplifier 12b amplifies the oscillation signal input from the oscillator 12a and outputs the same as the drive signal to the surface acoustic wave device 7, and in addition, gradually changes the drive frequency of the drive signal based on the control signal from the control unit 10.

The switch 13 is connected to a plurality of reaction vessels 6, and outputs the drive signal to a specific reaction vessel 6 out of a plurality of reaction vessels 6 contained in each of a plurality of holders 4a of the reaction table 4, and turns on and off the transducers 7b and 7c of the surface acoustic wave device 7, by changing an output timing of the drive signal by the control unit 10 by means of the drive unit 12. At this time, an output destination of the drive signal is included in the control signal output from the control unit 10 by means of the drive unit 12.

The automatic analyzer 1 thus configured analyzes the specimen dispensed to the reaction vessel 6, in a following manner. First, in the automatic analyzer 1, the reagent dispensing unit 3 dispenses a first reagent R1 from the reagent nozzle 3b to the dispensing holding unit Pb in the vicinity of the transducer 7b, under the control by the control unit 10, as shown in FIG. 3.

At this time, in the surface acoustic wave device 7, the non-affinity treatment is performed to the dispensing holding unit Pb in the vicinity of the transducer 7b to which the first reagent R1 is dispensed, so that the first reagent R1 becomes the liquid drop without spreading on the surface. Also, the reagent dispensing unit 3 dispenses the first reagent R1 to the dispensing holding unit Pb immediately above the transducer 7b or the dispensing holding unit Pb, which is closer to the holding member 8 than the transducer 7b, of the surface acoustic wave device 7. Further, the control unit 10 turns the switch 13 to turn off the transducers 7b and 7c of the surface acoustic wave device 7.

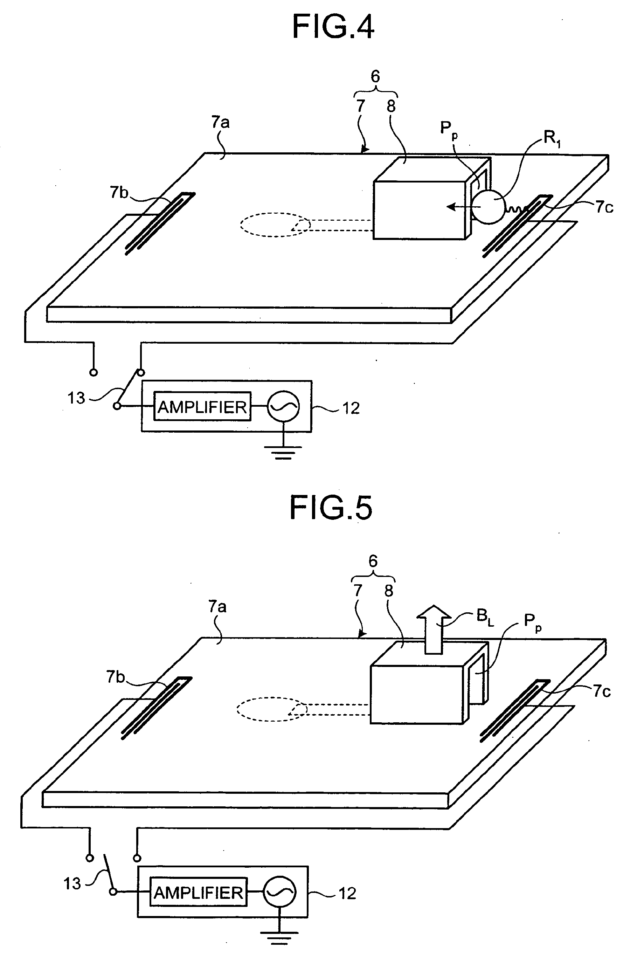

Next, the automatic analyzer 1 generates the surface acoustic wave by turning the switch 13 to turn on the transducer 7c under the control by the control unit 10, and conveys the first reagent R1 toward the holding member 8 along the surface of the piezoelectric substrate 7a in a liquid drop state, as shown in FIG. 4. Thereby, the first reagent R1 is sent to the light measuring holding unit Pp, which is formed of the surface acoustic wave device 7 and the holding member 8, and is held.

Afterward, the automatic analyzer 1 turns the switch 13 to turn off the transducer 7c, drives the drive motor 5 to rotate the reaction table 4, and allows the reaction vessel 6 to which the first reagent R1 is dispensed to move to the light measuring unit 9, under the control by the control unit 10. Thereby, the analytical light emitted from the light source 9a irradiates the reaction vessel 6 from the light measuring window 4b on a lower portion of the holder 4a, and a beam of light BL, which penetrates the first reagent R1, emits upward from the holding member 8, as shown in FIGS. 5 and 6. Herein, FIG. 6 is a cross-sectional view of the reaction vessel 6, which is cut centrally through the transducers 7b and 7c and the holding member 8.

Then, the light receiver 9b receives the beam of light, which penetrates the light measuring holding unit Pp, and outputs the light information to the control unit 10. Based on the light information, the control unit 10 calculates an absorbance of the first reagent R1 and stores the same. At this time, the light path length is constantly defined by the light measuring holding unit Pp.

After a blank light measurement regarding the first reagent R1 is finished in this manner, the automatic analyzer 1 drives the drive motor 5 to rotate the reaction table 4 and allows the reaction vessel 6 to which the first reaction R1 is dispensed to move to the specimen dispensing unit 2, under the control by the control unit 10. Next, the automatic analyzer 1 dispenses the specimen S from the specimen nozzle 2b to the liquid drop merging unit Pu of the surface acoustic wave device 7 under the control by the control unit 10, as shown in FIG. 7. At the same time, the automatic analyzer 1 turns the switch 13 to turn the transducer 7c on and discharges the first reagent R1 held in the light measuring holding unit Pp from the light measuring holding unit Pp by the surface acoustic wave generated by the transducer 7C to convey to the liquid drop merging unit Pu, under the control by the control unit 10. At this time, the specimen S dispenses to the liquid drop merging unit Pu of the reaction vessel 6, and the liquid drop merging unit Pu is included in a region of the dispensing holding unit Pb.

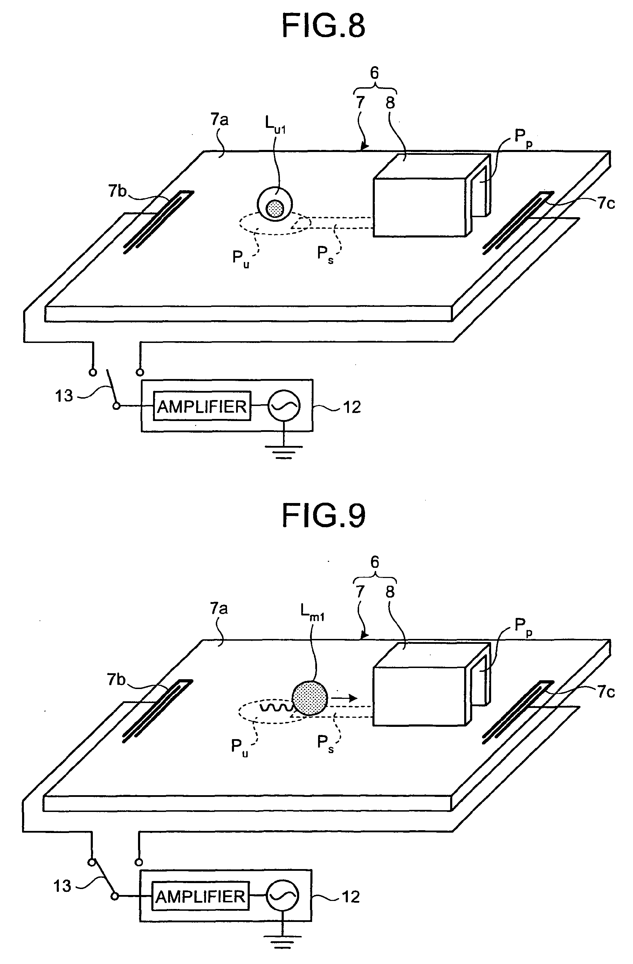

At this time, in the surface acoustic wave device 7, the liquid drop merging unit Pu and the stirring holding unit Ps having affinity are formed on a portion of the surface having non-affinity, as shown in FIG. 7. Therefore, the first reagent R1 discharged from the light measuring holding unit Pp becomes the liquid drop, and is guided by the stirring holding unit Ps to be conveyed to the liquid drop merging unit Pu by the surface acoustic wave. Thereby, the specimen S and the first reagent R1 merge at the liquid drop merging unit Pu to become a merged liquid Lu1, as shown in FIG. 8. At this time, the control unit 10 turns the switch 13 to turn off the transducers 7b and 7c.

Next, the automatic analyzer 1 turns the switch 13 to turn the transducer 7b on, as shown in FIG. 9, under the control by the control unit 10. Then, the merged liquid Lu1 of the specimen S and the first reagent R1 is conveyed along the stirring holding unit Ps to the holding member 8 in the liquid drop state by the surface acoustic wave generated by the transducer 7b, due to the non-affinity of the surrounding region. At this time, the merged liquid Lu1 is conveyed while rotating along the stirring holding unit Ps, so that the specimen S and the first reagent R1 are stirred in a short time by a flow generated in the liquid drop, and becomes a mixed liquid Lm1 to be conveyed on the stirring holding unit Ps toward the holding member 8, as shown in FIG. 9. At this time, the transducer 7b stirs and conveys the liquid simultaneously.

Then, the mixed liquid Lm1 conveyed to the holding member 8 by the surface acoustic wave generated by the transducer 7b is sent to the light measuring holding unit Pp by the surface acoustic wave, and is held in the light measuring holding unit Pp, as shown in FIGS. 10 and 11. After the sending of the mixed liquid Lm1 to the light measuring holding unit Pp is finished, the control unit 10 turns the switch 13 to turn off the transducer 7b, as shown in FIG. 10.

At this time, a volume of the mixed liquid Lm1, which is held in the light measuring holding unit Pp, and that of the mixed liquid Lm1, which has been held on the stirring holding unit Ps before being conveyed, are same. However, the mixed liquid Lm1 exists on the stirring holding unit Ps in the liquid drop state, and contacts the surface of the surface acoustic wave device 7 and the holding member 8 in the light measuring holding unit Pp. Therefore, on the stirring holding unit Ps, an area of a gas-liquid interface of the mixed liquid Lm1 at the time of stirring is held so as to be larger than the area of the gas-liquid interface of the mixed liquid Lm1 at the time of measuring light. Also, in the reaction vessel 6, the position of the stirring holding unit Ps for stirring the liquid and the position of the light measuring holding unit Pp for measuring light of the liquid are different. Therefore, in the mixed liquid Lm1 held on the stirring holding unit Ps, a contact area and a friction with a wall surface are smaller than those of the mixed liquid Lm1 held in the light measuring holding unit Pp, so that the flow is easily generated in the liquid drop and the specimen S and the first reagent R1 are stirred in a short time. On the other hand, the mixed liquid Lm1 held in the light measuring holding unit Pp is regulated in a shape (area) such that this contacts the surface acoustic wave device 7 and the holding member 8 over a wide area and an incident area of the analytical light is maximized.

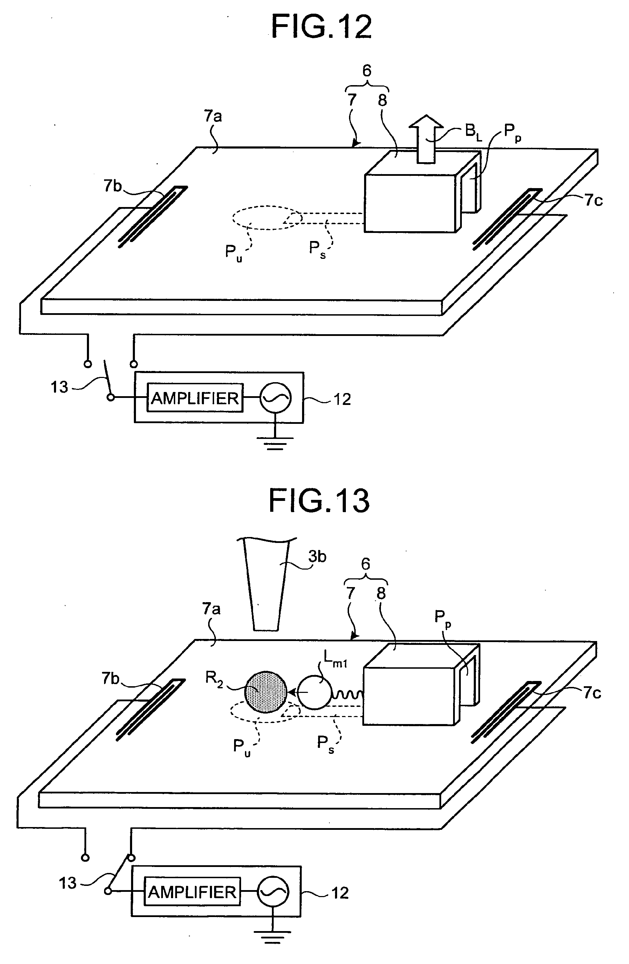

Next, the automatic analyzer 1 drives the drive motor 5 to rotate the reaction table 4 and allows the reaction vessel 6 holding the mixed liquid Lm1 to move to the light measuring unit 9, under the control by the control unit 10. Thereby, the analytical light emitted from the light source 9a irradiates the reaction vessel 6 from the light measuring window 4b on the lower portion of the holder 4a, and the beam of light BL, which penetrates the mixed liquid Lm1, emits upward from the holding member 8, as shown in FIG. 12. Then, the light receiver 9b receives the beam of light emitted from the holding member 8 and outputs the light information to the control unit 10. Based on the light information, the control unit 10 calculates the absorbance of the mixed liquid Lm1 and stores the same. The light path length at this time also is constantly defined by the light measuring holding unit Pp.

Next, the automatic analyzer 1 drives the drive motor 5 to rotate the table 4, and allows the reaction vessel 6 holding the mixed liquid Lm1 to move to the reaction dispensing unit 3 under the control by the control unit 10. After that, the automatic analyzer 1 dispenses a second reagent R2 from the reagent nozzle 3b to the liquid drop merging unit Pu of the surface acoustic wave device 7, and at the same time, turns the switch 13 to turn the transducer 7c on to discharge the mixed liquid Lm1 held in the light measuring holding unit Pp from the light measuring holding unit Pp by the surface acoustic wave, and then conveys the same to the liquid drop merging unit Pu, under the control by the control unit 10, as shown in FIG. 13.

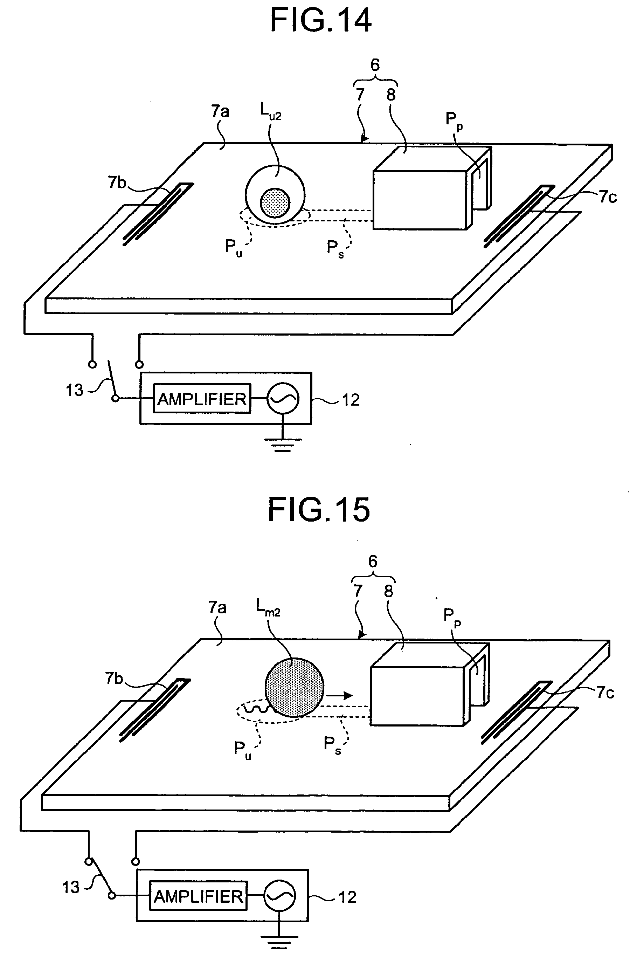

At this time, the liquid drop merging unit Pu and the stirring holding unit Ps having affinity on the surfaces thereof are formed on the surface acoustic wave device 7. Therefore, the mixed liquid Lm1 discharged from the light measuring holding unit Pp becomes the liquid drop, and is guided by the stirring holding unit Ps to be conveyed to the liquid drop merging unit Pu by the surface acoustic wave. Thereby, the mixed liquid Lm1 and the second reagent R2 merge at the liquid drop merging unit Pu to become a merged liquid Lu2, as shown in FIG. 14. At this time, the control unit 10 turns the switch 13 to turn the transducers 7b and 7c off.

After that, the automatic analyzer 1 turns the switch 13 to turn the transducer 7b on, as shown in FIG. 15, under the control by the control unit 10. Then, the merged liquid of the mixed liquid Lm1 and the second reagent R2 becomes the liquid drop and is conveyed on the stirring holding unit Ps to the holding member 8 by the surface acoustic wave generated by the transducer 7b, due to the non-affinity of the surrounding region. At this time, the merged liquid is in the liquid drop state just as the merged liquid Lu1, so that the contact area and the friction with the stirring holding unit Ps are small. Also, in the reaction vessel 6, the position of the stirring holding unit Ps for stirring the liquid and the position of the light measuring holding unit Pp for measuring light of the liquid are different from each other. Therefore, the merged liquid contacts the stirring holding unit Ps with a small area, and since this is conveyed while rotating on the dispensing holding unit Ps, the flow generates in the liquid drop, so that the mixed liquid Lm1 and the second reagent R2 are stirred in a short time and becomes the mixed liquid Lm2, and is conveyed on the stirring holding unit Ps toward the holding member 8, as shown in FIG. 15.

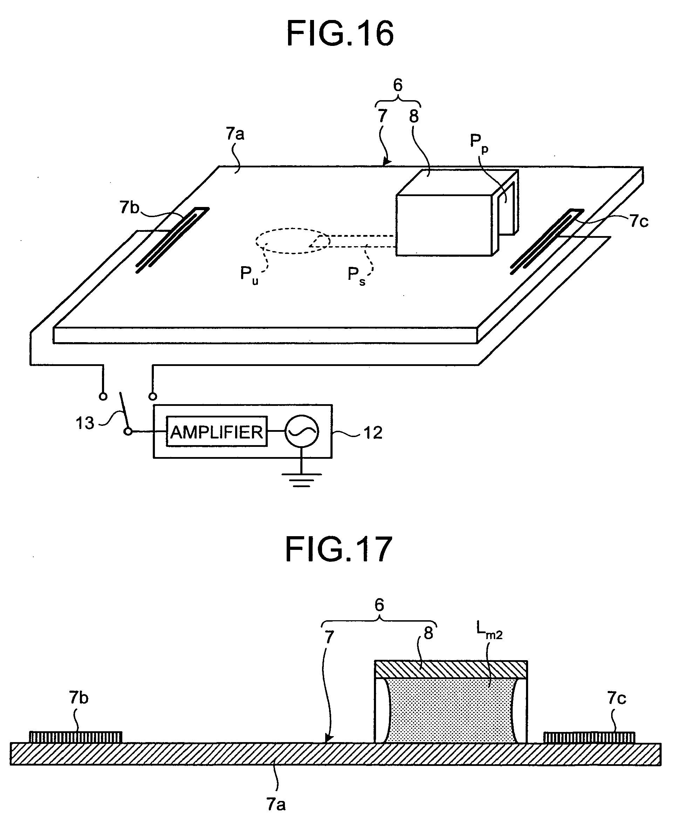

Then, the mixed liquid Lm2 conveyed to the holding member 8 by the surface acoustic wave generated by the transducer 7b is sent to the light measuring holing unit Pp by the surface acoustic wave, and is held in the light measuring holding unit Pp, as shown in FIGS. 16 and 17. After the mixed liquid Lm2 is held in the light measuring holding unit Pp, the control unit 10 turns the switch 13 to turn the transducer 7b off, as shown in FIG. 16.

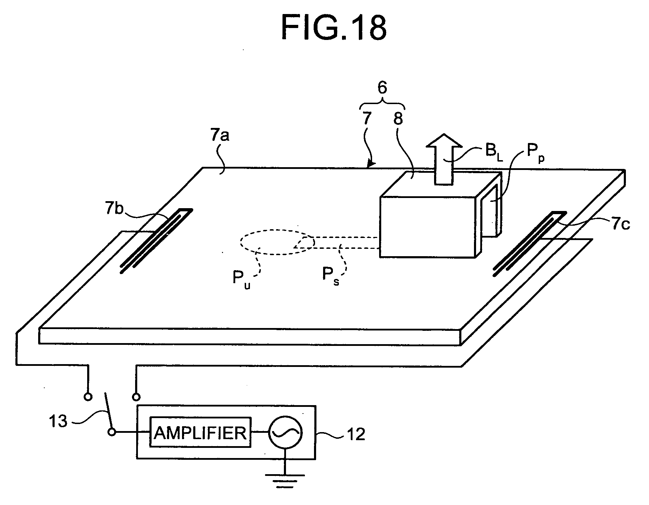

Next, the automatic analyzer 1 drives the drive motor 5 to rotate the reaction table 4 and allows the reaction vessel 6 holding the mixed liquid Lm2 to move to the light measuring unit 9, under the control by the control unit 10. Thereby, the analytical light emitted from the light source 9a irradiates the reaction vessel 6 from the light measuring window 4b on the lower portion of the holder 4a, and the beam of light BL, which penetrates the mixed liquid Lm2, emits upward from the holding member 8, as shown in FIG. 18. Then, the light receiver 9b receives the beam of light emitted from the holding member 8 and outputs the light information to the control unit 10. Based on the light information, the control unit 10 calculates the absorbance of the mixed liquid Lm2 and calculates the constituent concentration or the like of the specimen S based on the absorbance of the first reagent R1 and the mixed liquid Lm1 measured in advance. At this time also, the light path length is constantly defined by the light measuring holding unit Pp.

Herein, just as the description regarding the mixed liquid Lm1 held in the light measuring holding unit Pp and the mixed liquid Lm1 held on the stirring holding unit Ps, the stirring holding unit Ps holds the area of the gas-liquid interface of the mixed liquid Lm2 at the time of stirring so as to be larger than the area of the gas-liquid interface of the mixed liquid Lm2 at the time of measuring light. Therefore, the contact area and the friction with the wall surface of the mixed liquid Lm2 held in the stirring holding unit Ps are smaller than those of the mixed liquid Lm2 held in the light measuring holding unit Pp, so that the flow easily generates in the liquid drop, and the mixed liquid Lm1 and the second reagent R2 are stirred in a short time. On the other hand, the mixed liquid Lm2 held in the light measuring holding unit Pp is regulated in shape (area) such that this contacts the surface acoustic wave device 7 and the holding member 8 over the wide area, and the incident area of the analytical light is maximized.

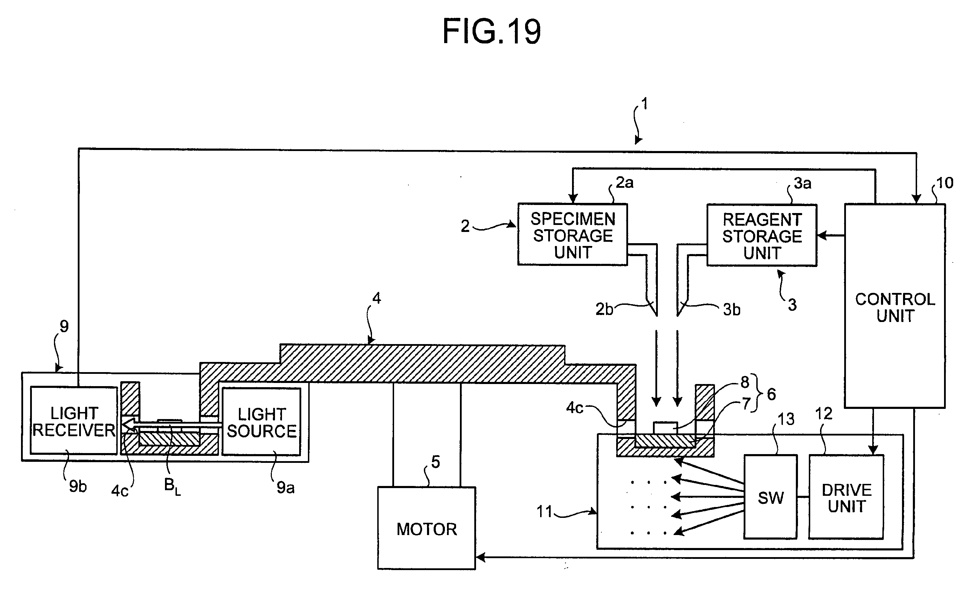

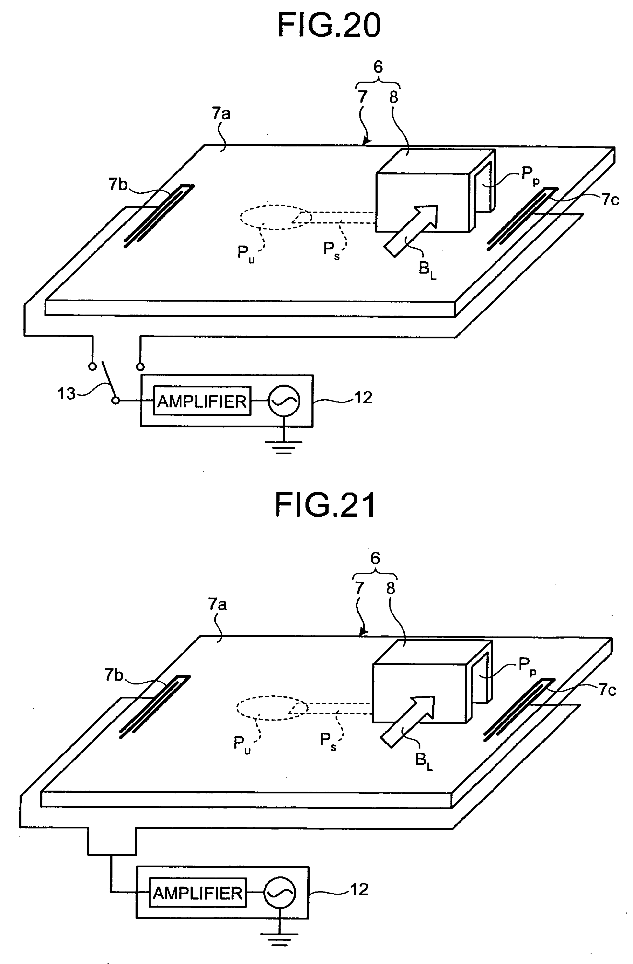

Also, in the automatic analyzer 1, the light measuring unit 9 may be horizontally disposed by disposing the light source 9a and the light receiving unit 9b on an inner peripheral side and on an outer peripheral side of the holder 4a, respectively, as shown in FIG. 19. In this manner, in the automatic analyzer 1, the light measuring unit 9 may be vertically and horizontally disposed, so that design flexibility thereof is improved. In this case, the holder 4a forms light measuring windows 4c on radially opposing side walls, instead of the light measuring window 4b formed on the center portion of the bottom wall. Also, the reaction vessel 6 measures light of the liquid held in the light measuring holding unit Pp by irradiating the holding member 8 with the beam of light BL in a horizontal direction, as shown in FIG. 20.

In this manner, the reaction vessel 6 and the automatic analyzer 1 hold the liquid in the liquid drop state on the stirring holding unit Ps, of which position is different from that of the light measuring holding unit Pp formed on the surface of the surface acoustic wave device 7, and stir the liquid while holding the area of the gas-liquid interface of the same so as to be larger than that of the liquid held in the light measuring holding unit Pp at the time of measuring light thereof, so that even when the liquid volume is minute, it is possible to sufficiently stir under a high stirring efficiency, thereby enabling an analysis, which is correct and excellent in reliability. Also, in a case of a minute reaction vessel, an opening area of the vessel is also small, so that it has been difficult to dispense the liquid. However, in the reaction vessel 6, the dispensing holding unit Pb is formed on the position different from that of the light measuring holding unit Pp, so that this may easily dispense the liquid even when the volume of the reagent or the liquid to be analyzed held in the dispensing holding unit Pb becomes minute and the vessel itself becomes minute.

Meanwhile, in the surface acoustic wave device 7, if center frequencies of the transducers 7b and 7c are set to f1 and f2, respectively, so as to be different from each other to change the frequency of the drive signal oscillated by the oscillator 12a based on the control signal from the control unit 10, the switch 13 is not necessary, as shown in FIG. 21. Regarding the reaction vessel 6 of the automatic analyzer 1, if the surface acoustic wave device 7 has such a circuit configuration, in the reaction vessel 6, if the drive frequency output by the oscillator 12a is f1, only the transducer 7b is driven and the transducer 7c is not driven. On the other hand, in the reaction vessel 6, if the drive frequency output from the oscillator 12a is f2, only the transducer 7c is driven and the transducer 7b is not driven. Therefore, the surface acoustic wave device 7 may switch the driving transducer between the transducers 7b and 7c, without using the switch 13, thereby simplifying the circuit configuration.

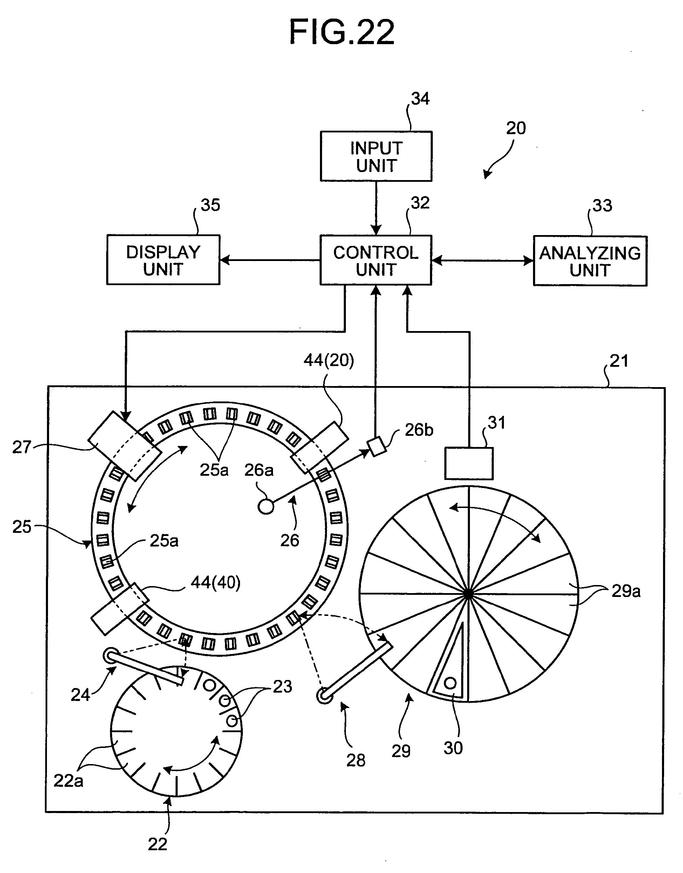

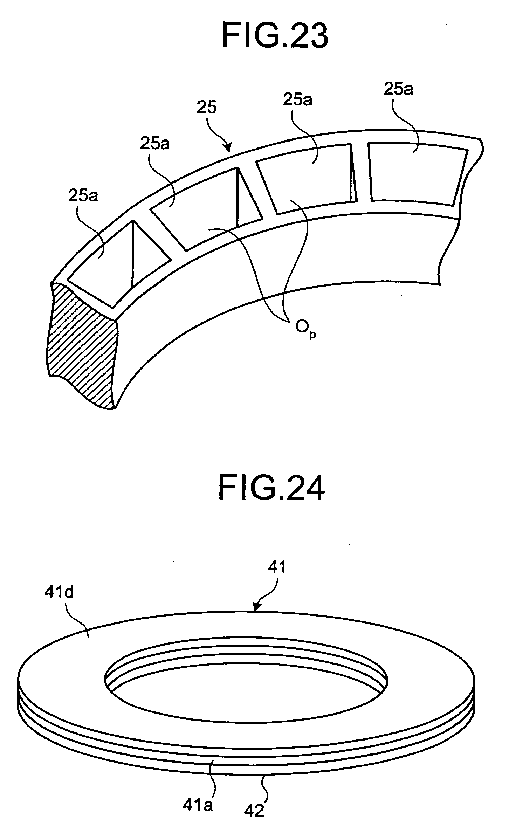

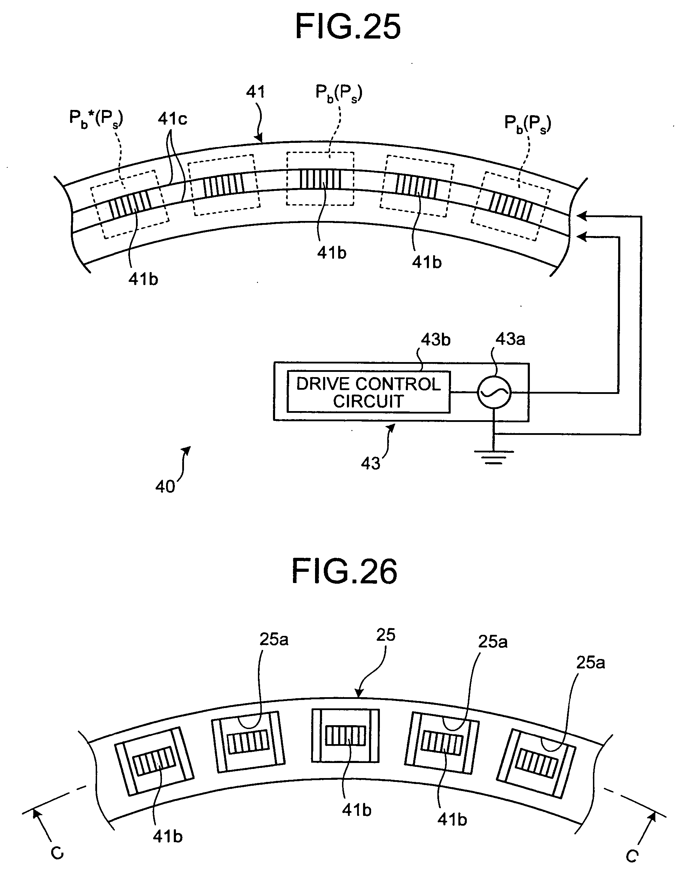

(Second Embodiment)
Next, a second embodiment of a reaction vessel and an analyzer according to the present invention will be described in detail with reference to the drawings. Although the first embodiment is the automatic analyzer using the Lab-on-a-chip type reaction vessel, the second embodiment is an automatic analyzer using the reaction vessel without a bottom wall in which a reaction wheel also serves as the reaction vessel. FIG. 22 is a schematic configuration diagram showing the automatic analyzer of the second embodiment. FIG. 23 is an enlarged perspective view showing a part of the reaction wheel of the automatic analyzer shown in FIG. 22. FIG. 24 is a perspective view of a surface acoustic wave device. FIG. 25 is a view showing a schematic configuration of a drive device in the automatic analyzer together with an enlarged plane view of a part of the surface acoustic wave device.

In an automatic analyzer 20, a specimen table 22, a reaction wheel 25 and a reagent table 29 are disposed on an operation table 21 at intervals so as to be rotatable along a peripheral direction, and a stirrer 40 is provided, as shown in FIG. 22. Also, in the automatic analyzer 20, a specimen dispensing mechanism 24 is disposed between the specimen table 22 and the reaction wheel 25, and a reagent dispensing mechanism 28 is disposed between the reaction wheel 25 and the reagent table 29.

The specimen table 22 is rotated in a direction indicated by an arrow by the drive means, as shown in FIG. 22, and a plurality of storage rooms 22a arranged at regular intervals along a peripheral direction are disposed on au outer periphery thereof. A specimen vessel 23 storing the specimen is detachably stored in each of the storage rooms 22a.

The specimen dispensing mechanism 24 is means for dispensing the specimen, and sequentially dispenses the specimen from a plurality of specimen vessels 23 of the specimen table 22 to light measuring holding units 25a of the reaction wheel 25.

The reaction wheel 25 is the reaction vessel having a surface acoustic wave device 41 as stirring means, and is shaped of a transparent material, which transmits no less than 80% of light included in an analytical light (340 to 800 nm) emitted from a light source 26a, for example, a glass including a heat resistance glass, and a synthetic resin such as a cyclic olefin and polystyrene, into a ring-shape, and works as the reaction vessel holding the liquid by abutting the surface acoustic wave device 41. The reaction wheel 25 is rotated together with the surface acoustic wave device 41, which is rotated by drive means different from that of the specimen table 22, when this is allowed to abut the surface acoustic wave device 41. In the reaction wheel 25, a plurality of light measuring holding units 25a arranged at regular intervals along a peripheral direction are disposed, as shown in FIG. 23. The reaction wheel 25 rotates clockwise by (one revolution minus one reaction vessel)/4 per one cycle, and rotates counterclockwise by one light measuring holding unit 25a per four cycles.

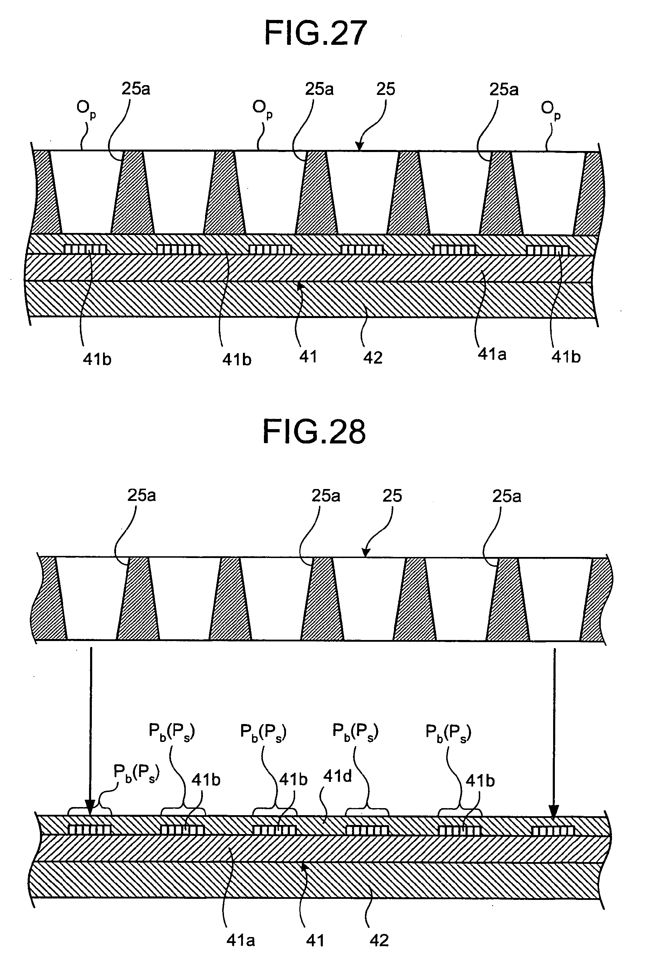

The light measuring holding units 25a for holding a minute volume of liquid of which capacity is a few nL to a several tens of µL are formed on a region different from that of the stirring holding unit Ps, by allowing the reaction wheel 25 to abut an upper surface of the surface acoustic wave device 41. In the light measuring holding unit 25a, a liquid-affinity treatment is performed on an inner surface thereof, which contacts the liquid, and as shown in FIGS. 26 and 27, side walls opposing in a radial direction of the reaction wheel 25 are parallel, and side walls opposing in a peripheral direction are slanted so as to be closer toward the bottom thereof, thereby making an opening Op on an upper portion so as to be larger than an opening on a lower portion. Herein, a plurality of light measuring holding units 25a are formed at a space just as a plurality of transducers 41b disposed on the surface acoustic wave device 41, and is shaped in a size such that the liquid is introduced from the opening on the lower portion by a surface tension. Also, each of the light measuring holding units 25a is formed so as to be larger in some degree than a plane area of the transducer 41b such that the transducer 41b is stored in the opening on the lower portion, as shown in FIG. 26. Therefore, the light measuring holding unit 25a constantly defines a thickness, that is to say, a light path length in a light transmission direction of the held liquid, at the time of measuring light of the liquid. In addition, the light source 26a and a discharger 27 are disposed in the vicinity of the reaction wheel 25.

A measuring optical unit 26 has the light source 26a and a right receiving device 26b, as shown in FIG. 22. The light source 26a emits the analytical light (340 to 800 nm), which analyzes the liquid in the light measuring holding unit 25a in which the reagent and the specimen are reacted, from an inner side of the reaction wheel 25 to an outer side thereof in a horizontal direction. An analytical light beam emitted from the light source 26a penetrates the liquid in the light measuring holding unit 25a and is received by the light receiving device 26b disposed on a position opposing to that of the light source 26a. On the other hand, the discharger 27 is provided with a discharge nozzle to suck the liquid of which reaction is finished from the light measuring holding unit 25a by means of the discharge nozzle and discharges the same to a discharge vessel. Herein, the light measuring holding unit 25a, which passes through the discharger 27, is transferred to a cleaner to be cleaned, and is used again for analyzing a new specimen.

A reagent dispensing mechanism 28 is means for dispensing the reagent, and sequentially dispenses the reagent from a predetermined reagent vessel 30 of the reagent table 29 to the light measuring holding units 25a of the reaction wheel 25, as shown in FIG. 22.

The reagent table 29 is rotated by drive means different from that of the specimen table 22 and the reaction wheel 25 in a direction indicated by an arrow, as shown in FIG. 22, and a plurality of sector-shaped storing rooms 29a are disposed along a peripheral direction thereof. A reagent vessel 30 is detachably stored in each of the storing rooms 29a. A plurality of reagent vessels 30 are filled with predetermined reagents according to each inspection item, and a barcode label (not shown) representing information regarding the stored reagent is applied on an outer surface thereof.

Herein, a reader 31 is disposed on an outer periphery of the reagent table 29, as shown in FIG. 22. The reader 31 reads information such as a kind, a lot, an expiration date and the like of reagents recorded on the barcode label applied on the reaction vessels 30, and outputs the same to the control unit 32. The control unit 32 is connected to the light receiving device 26b, the discharger 27, the reader 31, an analyzing unit 33, an input unit 34, a display unit 35, and a stirrer 40, and a microcomputer or the like provided with a storing function to store the analytical result is used, for example. The control unit 32 controls operations of each unit of the automatic analyzer 20, and at the same time, based on the information read from the record of the barcode label, if the lot, the expiration date and the like of the reagent is out of a set range, controls the automatic analyzer 20 to regulate an analytical operation or alerts an operator.

The analyzing unit 33 is connected to the light receiving device 26b through the control unit 32, and analyzes the constituent concentration or the like of the specimen from the absorbance of the liquid in the light measuring holding unit 25a based on the volume of light received by the light receiving device 26b, then outputs the analytical result to the control unit 32. The input unit 34 is a portion for performing an input operation of the inspection item or the like to the control unit 32, and a keyboard, a mouse, and the like is used, for example. The display unit 35 is for displaying the analytical content or the alert, and the display panel or the like is used.

The stirrer 40 is for stirring the liquid held in the light measuring holding unit 25a by a sound wave, and is provided with the surface acoustic wave device 41, a drive device 43 and a lifting mechanism 44, as shown in FIGS. 22, 24 and 25.

The surface acoustic wave device 41 is stirring means, which is shaped into a ring-shaped circular plate just as the reaction wheel 25, as shown in FIGS. 24 and 25, and is disposed below the reaction wheel 25 such that the transducer 41b corresponds to the light measuring holding unit 25a. In the surface acoustic wave device 41, a plurality of transducers (sound producing units) 41b made of interdigital transducers (IDT) are connected in parallel to an oscillator 43a by a bus bar 41c (refer to FIG. 25) on the piezoelectric substrate 41a such as lithium niobate (LiNbO₃), and the transducer 41b and the bus bar 41c are protected by a cover 41d made of silicon dioxide (SiO₂) or the like. Herein, all of a plurality of transducers 41b are excited and driven at once by the same driving signal, if the center frequencies thereof are same. However, only the transducer 41b having the center frequency corresponding to the drive frequency of a plurality of transducers 41b are excited and selectively driven, if the center frequencies thereof are set so as to be different from each other. Meanwhile, in the following drawings, including FIG. 25, to be used for describing the surface acoustic wave device, the transducers are sometimes schematically shown so as to be simply shown.

Herein, in the surface acoustic wave device 41, the affinity treatment for liquid such as specimen and reagent is performed on the upper portion of the transducer 41b on the surface of the cover 41d, and non-affinity treatment is performed on portion other than the upper portion of the transducer 41b, thereby the dispensing holding unit Pb (refer to FIGS. 25 and 28), which also serves as the stirring holding unit Ps, is formed, as indicated by the broken line in FIG. 25. Therefore, in the surface acoustic wave device 41, a region on the cover 41d including the transducer 41b acts as the dispensing holding unit Pb holding the reagent or the specimen after being dispensed. Therefore, the liquid held on the dispensing holding unit Pb (stirring holding unit Ps) easily becomes the liquid drop due to the non-affinity of the surrounding region, and the area of the gas-liquid interface of the liquid at the time of stirring becomes larger than the gas-liquid interface of the liquid held in the light measuring holding unit 25a at the time of measuring light.

Also, in the surface acoustic wave device 41, a constant temperature plate 42, so-called a dry bus, formed of aluminum or the like, is disposed on a lower surface thereof, as shown in FIG. 24. The constant temperature plate 42 keeps a temperature of the liquid held in the light measuring holding unit 25a of the reaction wheel 25 about 37 degrees C through the surface acoustic wave device 41.

The drive device 43 is drive means for transmitting electricity to the surface acoustic wave device 41 to drive the same, and has the oscillator 43a and a drive control circuit 43b, as shown in FIG. 25. The oscillator 43a has an oscillation circuit capable of programmably changing an oscillation frequency based on a control signal from the drive control circuit 43b, and transmits electricity of a high-frequency about some tens of MHz to some hundreds of MHz to the surface acoustic wave device 41, thereby allowing each of the transducers 41b to oscillate the sound wave. An electronic control unit (ECU), which incorporates a memory and a timer, is used as the drive control circuit 43b to control the drive signal of the surface acoustic wave device 41. The drive control circuit 43b controls an operation of the oscillator 43a and controls, for example, the characteristics (frequency, intensity, phase, characteristics of wave), wave patterns (sine wave, triangle wave, rectangular wave, burst wave, or the like) or modulations (amplitude modulation, frequency modulation) of the sound wave generated by the surface acoustic wave device 41. Also, the drive control circuit 43b may change the frequencies of the oscillation signal oscillated by the oscillator 43a, according to the incorporated timer.

The lifting mechanisms 44 are single-axis stages, which are arranged so as to be opposed to each other in a diameter direction of the reaction wheel 25, and operate in conjunction with each other to allow the reaction wheel 25 to move in the vertical direction relative to the surface acoustic wave device 41, as shown in FIG. 22. The lifting mechanism 44 raises and lowers the reaction wheel 25, thereby allowing the same to isolate from and abut the surface acoustic wave device 41. Herein, FIG. 27 shows a state in which the lifting mechanism 44 lowers the reaction wheel 25, thereby allowing the same to abut the upper surface of the surface acoustic wave device 41. On the other hand, FIG. 28 shows a state in which the lifting mechanism 44 raises the reaction wheel 25, thereby allowing the same to elongate from the surface acoustic wave device 41. By the operation of the lifting mechanism 44, the dispensing holding unit Pb and the light measuring holding unit Pp move relative to each other. Therefore, the specimen dispensing mechanism 24 and the reagent dispensing mechanism 28 dispense the specimen and the reagent to the dispensing holding unit Pb (stirring holding unit Ps) on the upper surface of the surface acoustic wave device 41 when the lifting mechanism 44 raises the reaction wheel 25, and dispense the reagent to each of the light measuring holding units 25a of the reaction wheel 25 when the lifting mechanism 44 lowers the reaction wheel 25.

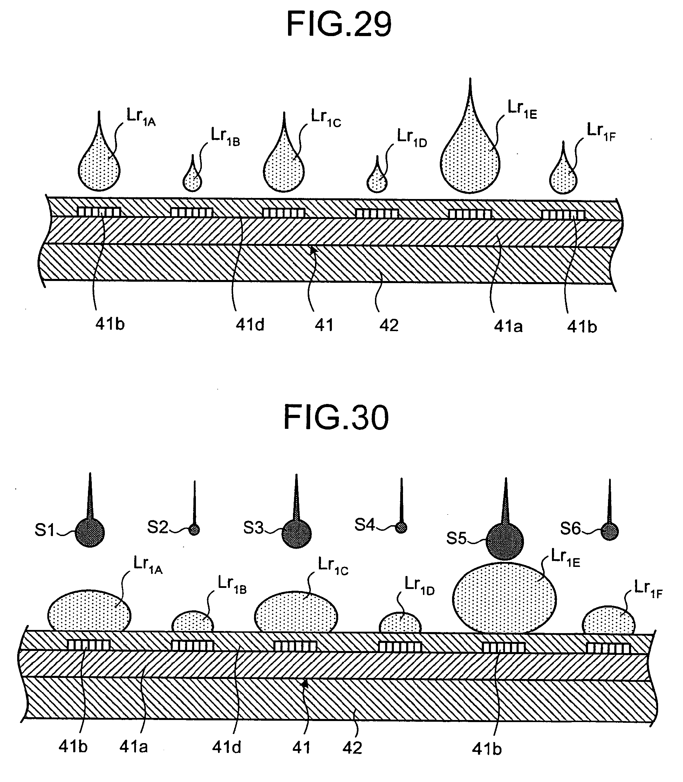

In the automatic analyzer 20 thus configured, the lifting mechanism 44 raises the reaction wheel 25, thereby allowing the reaction wheel 25 to isolate from the dispensing holding unit Pb on the upper surface of the surface acoustic wave device 41, under the control by the control unit 32. In this state, the automatic analyzer 20 rotates the surface acoustic wave device 41 and sequentially moves the stirring holding units Ps corresponding to each of the transducers 41b of the surface acoustic wave device 41 to the dispensing position by the reagent dispensing mechanism 28, under the control by the control unit 32. Then, first reagents Lr1A to Lr1F are sequentially dispensed from a predetermined reagent vessel 30 of the reagent table 29 to each of the dispensing holding units Pb (stirring holding units Ps) of the surface acoustic wave device 41, by the nozzle of the reagent dispensing mechanism 28 (refer to FIG. 29).

At this time, in the surface acoustic wave device 41, the affinity treatment is performed on the upper portion of the transducers 41b, non-affinity treatment is performed on other portions, and a plurality of dispensing holding units Pb (stirring holding units Ps) are formed on the surface thereof along the peripheral direction. Therefore, the dispensed first reagents Lr1A to Lr1F form hemispherical liquid drops on the dispensing holding unit Pb (stirring holding unit Ps) of the surface acoustic wave device 41, as shown in FIG. 30. Also, although a blank light measurement is not performed for the dispensed first reagents Lr1A to Lr1F, it is possible to perform the blank light measurement in advance, store a light measurement value in the control unit 32 as a blank light measurement data, and read out the same from the control unit 32 to use as necessary.

Next, the automatic analyzer 20 rotates the surface acoustic wave device 41 and sequentially dispenses specimens S1 to S6 from the predetermined specimen vessels 23 of the specimen table 22 from above the first reagents Lr1A to Lr1F held in the dispensing holding unit Pb (stirring holding unit Ps) of the surface acoustic wave device 41, by the nozzle of the specimen dispensing mechanism 24, under the control by the control unit 32 (refer to FIG. 30). At this time, the first reagents Lr1A to Lr1F and the specimens S1 to S6 are mixed and kept in the liquid drop state.

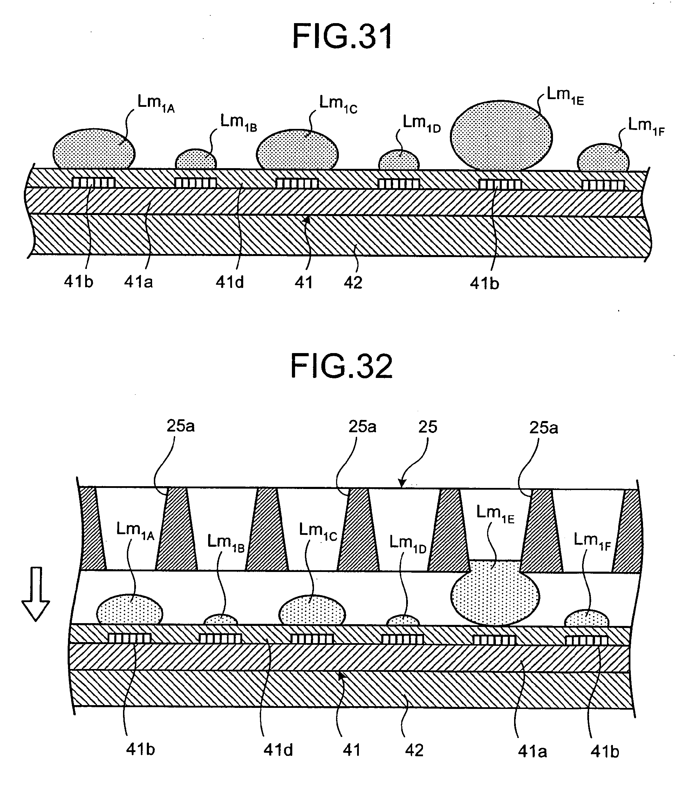

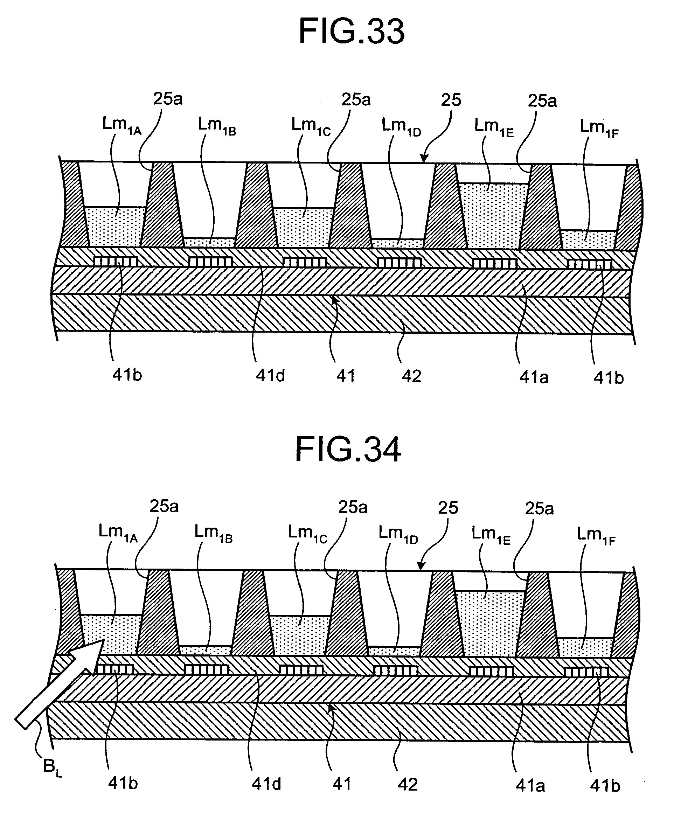

Next, the automatic analyzer 20 drives the surface acoustic wave device 41 by means of the drive device 43 and stirs the first reagents Lr1A to Lr1F held in each of the stirring holding units Ps and the specimens S1 to S6 corresponding to the same by the sound wave generated by each of the transducers 41b, thereby making mixed liquids Lm1A to Lm1F, under the control by the control unit 32 (refer to FIG. 31). At this time, since the position of the stirring holding unit Ps and the position of the light measuring holding unit 25a are different from each other, the mixed liquids Lm1A to Lm1F are sufficiently stirred in a state in which the liquid drop state is kept, and since the friction between the same and the surface of the surface acoustic wave device 41 is small, the stirring finishes immediately. Moreover, the mixed liquids Lm1A to Lm1F in each dispensing holding unit Pb (stirring holding unit Ps) are held in shapes different from those at the time of measuring light, and are stirred while the area of the gas-liquid interface thereof is held so as to be larger than that held in the light measuring holding unit 25a at the time of measuring light (refer to FIG. 34), so that it is possible to sufficiently stir the liquid under a high stirring efficiency even when the volume thereof is minute, thereby enabling an analysis correct and excellent in reliability.

After stirring, the automatic analyzer 20 lowers the reaction wheel 25 by the lifting mechanism 44 under the control by the control unit 32 (refer to FIG. 32). At this time, in the reaction wheel 25, the liquid-affinity treatment is performed on the inner surface of the light measuring holding unit 25a, and the light measuring holding unit 25a is shaped into a size in which the liquid is introduced from the opening on the lower portion by the surface tension. Therefore, when the reaction wheel 25 is lowered, each of the mixed liquids Lm1A to Lm1F abuts the lower portion of the corresponding light measuring holding unit 25a according to the volume thereof, and each of the mixed liquids Lm1A to Lm1F are sequentially introduced into the corresponding light measuring holding unit 25a, for example, like the mixed liquid Lm1E shown in FIG. 32.

Then, after the lifting mechanism 44 finishes lowering the reaction wheel 25, the reaction wheel 25 abuts the upper surface of the surface acoustic wave device 41 as shown in FIG. 33, and the mixed liquids Lm1A to Lm1F are held in each of the light measuring holding units 25a. In this state, in the automatic analyzer 20, the reaction wheel 25 is rotated to the position of the measuring optical unit 26 together with the surface acoustic wave device 41, under the control by the control unit 32. Thereby, light of the mixed liquids Lm1A to Lm1F in each light measuring holding unit 25a is sequentially measured by the beam of light BL emitted from the light source 26a, as shown in FIG. 34. In this manner, the light measurement is performed in a state in which the dispensing holding unit Pb and the light measuring holding unit Pp come into contact with each other. At this time, each light measuring holding unit 25a constantly defines the light path length of the measurement light, which penetrates the held liquid, so that a stable measurement result may be obtained regarding the mixed liquids Lm1A to Lm1F.

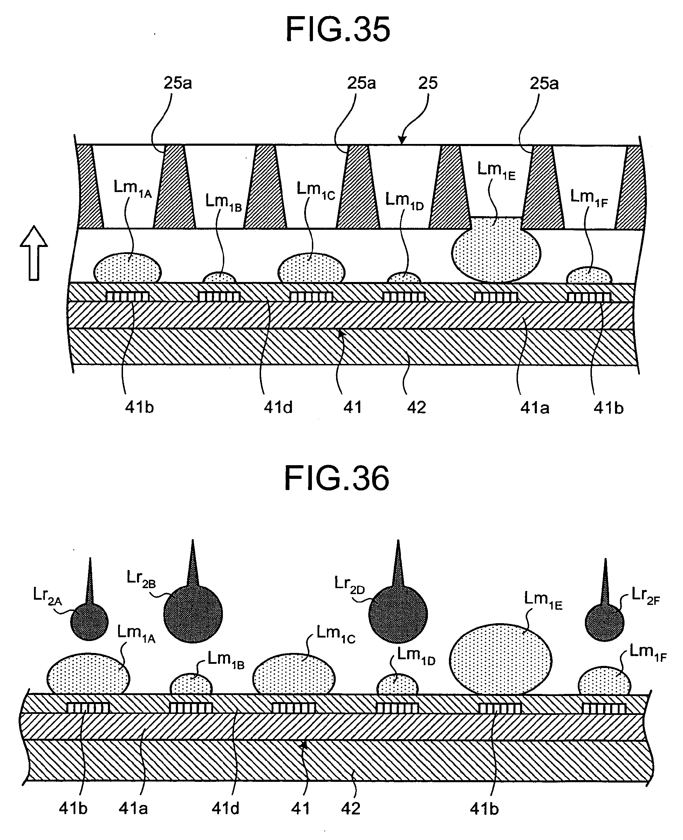

Next, the automatic analyzer 20 raises the reaction wheel 25 by the lifting mechanism 44, thereby allowing the same to isolate from the surface acoustic wave device 41, under the control by the control unit 32 (refer to FIG. 35). Thereby, the reaction wheel 25 returns the mixed liquids Lm1A to Lm1F held in each of the light measuring holding units 25a to the corresponding dispensing holding unit Pb (stirring holding unit Ps) on the surface of the surface acoustic wave device 41. At this time, in the surface acoustic wave device 41, the affinity treatment is performed on the dispensing holding units Pb (stirring holding units Ps) such that the liquid-affinity becomes higher than that on the inner surface of the vessel. Therefore, when the reaction wheel 25 is raised, the mixed liquids Lm1A to Lm1F of each light measuring holding unit 25a are returned to the corresponding dispensing holding unit Pb (stirring holding unit Ps). At this time, if discharging measure is applied, for example, the air pressure is applied from above, the reaction wheel 25 may return the mixed liquids Lm1A to Lm1F to the dispensing holding units Pb (stirring holding units Ps) more smoothly.

Next, the automatic analyzer 20 rotates the surface acoustic wave device 41 to allow each dispensing holding unit Pb (stirring holding unit Ps) of the surface acoustic wave device 41 to sequentially move to the dispensing position by the reagent dispensing mechanism 28, under the control by the control unit 32. Then, second reagents Lr2A, Lr2B, Lr2D and Lr2F are sequentially dispensed from the predetermined reagent vessels 30 of the reagent table 29 by the nozzle of the reagent dispensing mechanism 28 from above the mixed liquids Lm1A to Lm1F, which are returned to each dispensing holding unit Pb (stirring holding unit Ps) of the surface acoustic wave device 41 (refer to FIG. 36).

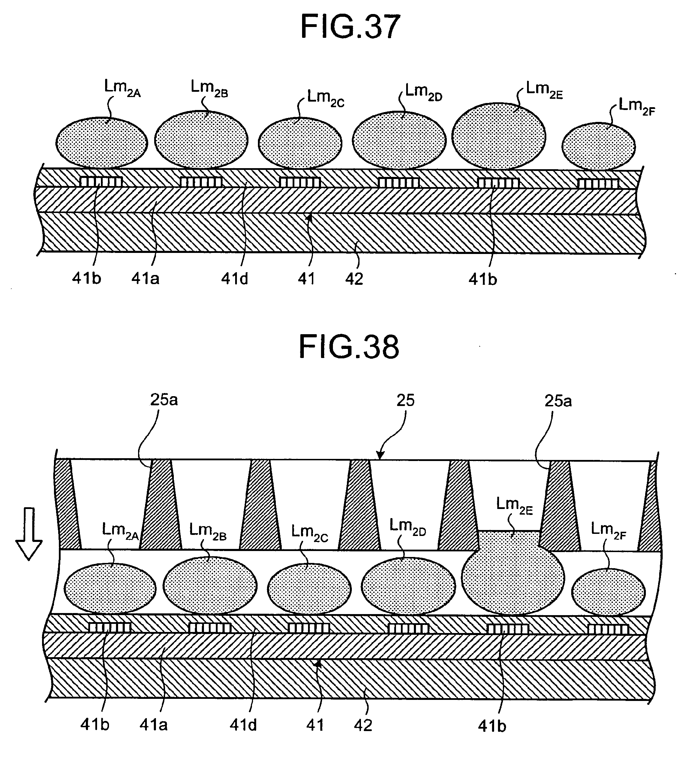

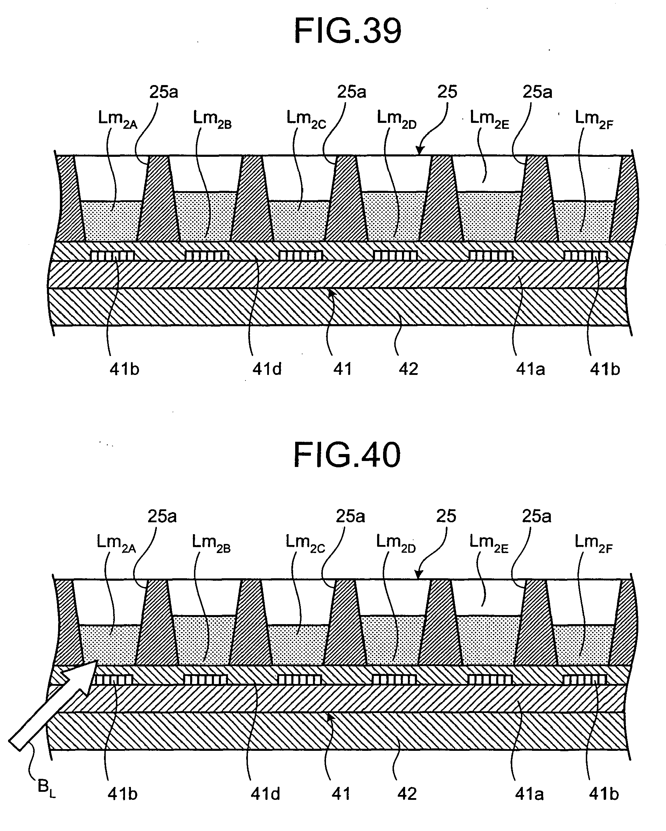

After that, the automatic analyzer 20 drives the surface acoustic wave device 41 by means of the drive device 43 and stirs the mixed liquids Lm1A to Lm1F held in each of the dispensing holding units Pb (stirring holding units Ps) and the second reagents Lr2A, Lr2B, Lr2D and Lr2F corresponding to the same by the sound wave generated by each of the transducers 41b, thereby making mixed liquids Lm2A to Lm2F, under the control by the control unit 32 (refer to FIG. 37). At this time, each of the mixed liquids Lm2A to Lm2F is sufficiently stirred in a state in which the liquid drop state thereof is held and the stirring is finished immediately, since the position of the dispensing holding unit Pb (stirring holding unit Ps) and the position of the light measuring holding unit 25a are different from each other and the friction with the surface of the surface acoustic wave device 41 is small. Further, since the mixed liquids Lm2A to Lm2F of each of the dispensing holding units Pb (stirring holding units Ps) are stirred while the area of the gas-liquid interface thereof are held so as to be larger than that held in the light measuring holding unit 25a at the time of measuring light (refer to FIG. 40), it is possible to sufficiently stir under the high stirring efficiency even when the liquid volume is minute, thereby enabling the analysis correct and excellent in reliability.

Next, the automatic analyzer 20 lowers the reaction wheel 25 by the lifting mechanism 44 under the control by the control unit 32 (refer to FIG. 38). Then, as described with reference to FIG. 32, the reaction wheel 25 is lowered and abuts the lower portion of the corresponding light measuring holding unit 25a according to the volume of the mixed liquids Lm2A to Lm2F, and with this, the mixed liquids Lm2A to Lm2F are sequentially introduced into the corresponding light measuring holding unit 25a, for example, like the mixed liquid Lm2E shown in FIG. 38.

Then, after the lifting mechanism 44 finishes lowering the reaction wheel 25, as shown in FIG. 39, the reaction wheel 25 abuts the upper surface of the surface acoustic wave device 41, and the mixed liquids Lm2A to Lm2F are held in each of the light measuring holding units 25a. In this state, in the automatic analyzer 20, the reaction wheel 25 is rotated together with the surface acoustic wave device 41 under the control by the control unit 32, and the light of the mixed liquids Lm2A to Lm2F in each of the light measuring holding units 25a is sequentially measured by the beam of light BL emitted from the light source 26a, as shown in FIG. 40. At this time, in the reaction wheel 25, each of the light measuring holding unit 25a defines the light path length of the light, which penetrates the held liquid, so that the stable measurement result may be obtained regarding the mixed liquids Lm2A to Lm2F. Also, the control unit 32 calculates the constituent concentration or the like of the specimens S1 to S6 based on the absorbance regarding the mixed liquids Lm1A to Lm1F and the mixed liquids Lm2A to Lm2F obtained by thus measuring light.

After the light measurement is finished in such a manner, the automatic analyzer 20 raises the reaction wheel 25 by the lifting mechanism 44 to discharge the mixed liquids Lm2A to Lm2F to each of the light measuring holding units 25a under the control by the control units 32, and after that, pours a cleaning liquid into each of the light measuring holding units 25a from above to clean the reaction wheel 25 together with the surface acoustic wave device 41. After cleaning, the automatic analyzer 20 lowers the reaction wheel 25 by the lifting mechanism 44 under the control by the control unit 32 to start analyzing a new specimen.

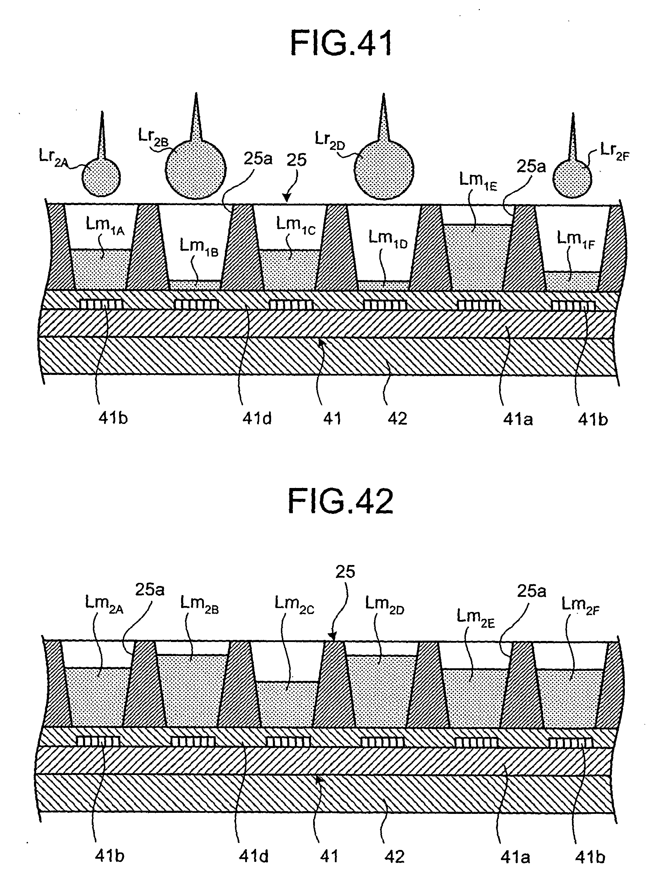

Herein, the automatic analyzer 20 may perform a process after dispensing the second reagents Lr2A, Lr2B, Lr2D and Lr2F to the mixed liquids Lm1A to Lm1F in a state in which the mixed liquids Lm1A to Lm1F are held in each of the light measuring holding units 25a. That is to say, the automatic analyzer 20 lowers the reaction wheel 25 by the lifting mechanism 44, and as shown in FIG. 41, dispenses the second reagents Lr2A, Lr2B, Lr2D and Lr2F to each of the light measuring holding units 25a from above, in a state in which the reaction wheel 25 abuts the upper surface of the surface acoustic wave device 41 and the mixed liquids Lm1A to Lm1F are held in each of the light measuring holding units 25a. Next, as shown in FIG. 42, the automatic analyzer 20 drives the surface acoustic wave device 41 in a state in which the reaction wheel 25 abuts the upper surface of the surface acoustic wave device 41, and stirs the mixed liquids Lm1A to Lm1F held in each of the dispensing holding units Pb (stirring holding units Ps) and the second reagents Lr2A, Lr2B, Lr2D and Lr2F, thereby making the mixed liquids Lm2A to Lm2F.

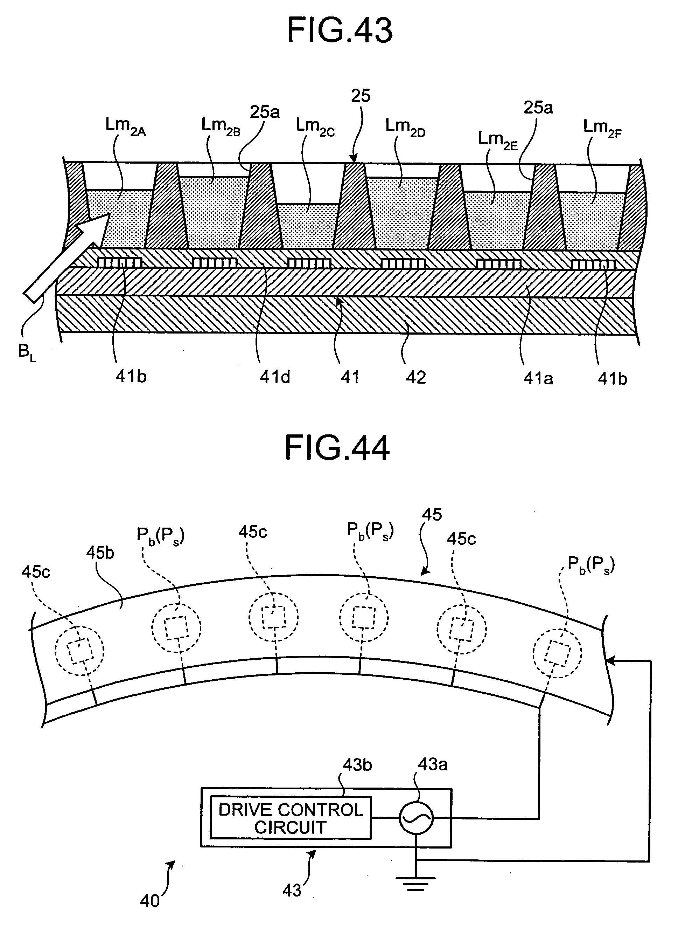

Then, the automatic analyzer 20 sequentially measures light of the mixed liquids Lm2A to Lm2F in each of the light measuring holding units 25a by the beam of light BL emitted from the light source 26a, as shown in FIG. 43. In this manner, it becomes possible to reduce the number of times to raise and lower the reaction wheel 25 by the lifting mechanism 44, thereby reducing the time required for analysis.

In this manner, in the reaction wheel 25 and the automatic analyzer 20, the position of the dispensing holding unit Pb and the position of the light measuring holding unit 25a are different from each other, and it is possible to dispense the liquid to the dispensing holding unit Pb formed on the surface of the surface acoustic wave device 41 in the liquid drop state, so that it is possible to easily dispense the liquid to the reaction vessel even when the volume of liquid to be analyzed becomes minute and the reaction vessel accordingly becomes minute. Also, the dispensing holding unit Pb also serves as the stirring holding unit Ps and holds the liquid in the stirring holding unit Ps formed on the surface of the surface acoustic wave device 41 in a shape different from that at the time of measuring light, and at the same time, holds the area of the gas-liquid interface of the liquid so as to be larger than that held in the light measuring holding unit 25a at the time of measuring light. Therefore, the reaction wheel 25 and the automatic analyzer 20 may sufficiently stir the liquid with the high stirring efficiency even when the volume thereof is minute, thereby enabling the analysis correct and excellent in reliability.

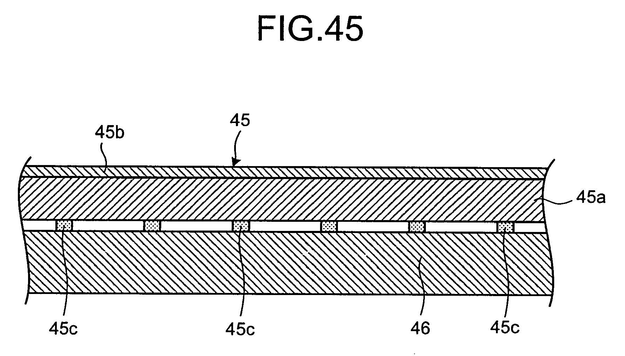

Herein, the drive device 40 of the automatic analyzer 20 uses the surface acoustic wave device 41 as sound wave generating means for generating the sound wave for stirring. However, it is sufficient that the position of the dispensing holding unit Pb for dispensing the liquid and the position of the light measuring holding unit 25a for measuring light of the liquid are different from each other in the analyzer of the present invention, it is also possible that the drive device 40 of the automatic analyzer 20 use a thickness-extensional vibrator 45 shown in FIGS. 44 and 45. At this time, the analyzer of the present invention may stir the liquid while holding the area of the gas-liquid interface thereof so as to be larger than that at the time of measuring light, thereby stirring the liquid with further high stirring efficiency.

In this case, the thickness-extensional vibrator 45 shown in FIGS. 44 and 45 has a common electrode 45b provided on one surface of the piezoelectric substrate 45a made of lead zirconium titanate (PZT) and a plurality of divided electrodes 45c provided on the other surface, and a constant temperature plate 46 made of aluminum or the like is provided on a side of the plurality of divided electrodes 45c. The common electrode 45b and the divided electrodes 45c are the sound producing units for converting the electricity transmitted from the drive device 43 to the surface acoustic wave (sound wave), and the sound wave is emitted from the common electrode 45b. In the thickness-extensional vibrator 45, the affinity treatment for liquid such as specimen and reagent is performed on a circular region having the divided electrodes 45c on the center portion thereof, on the surface of the common electrode 45b, which the reaction wheel 25 abuts, and the non-affinity treatment is performed on other portions, thereby the dispensing holding unit Pb (stirring holding unit Ps) is formed as indicated by the broken line in FIG. 44.

Herein, all of the plurality of divided electrodes 45c are excited and driven at the same time with regard to the same drive signal, when the center frequencies thereof are the same. However, if the center frequencies of a plurality of divided electrodes 45c are set to be different to one another, only the transducer 41b having the center frequency corresponding to the drive frequency is excited and selectively driven.

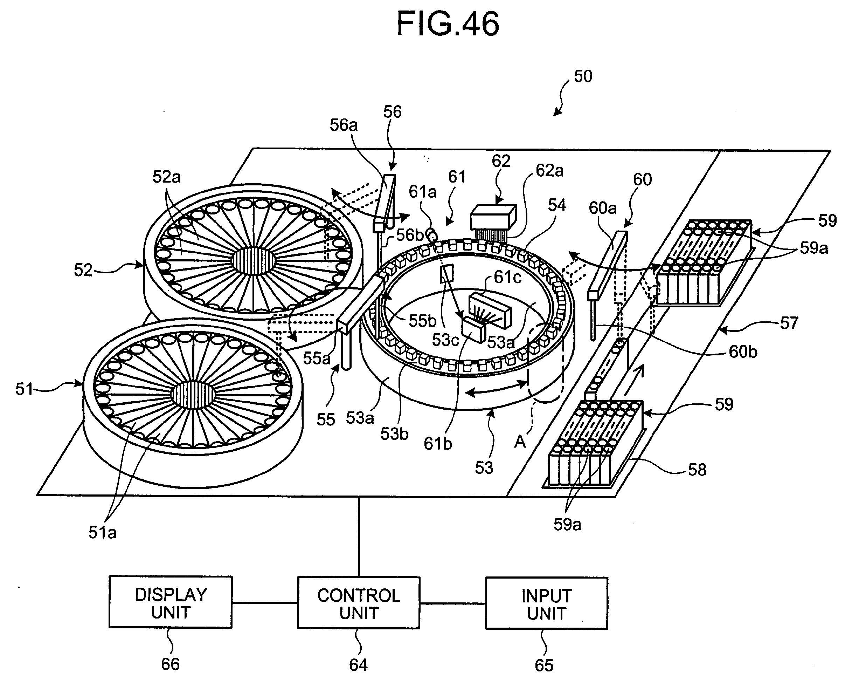

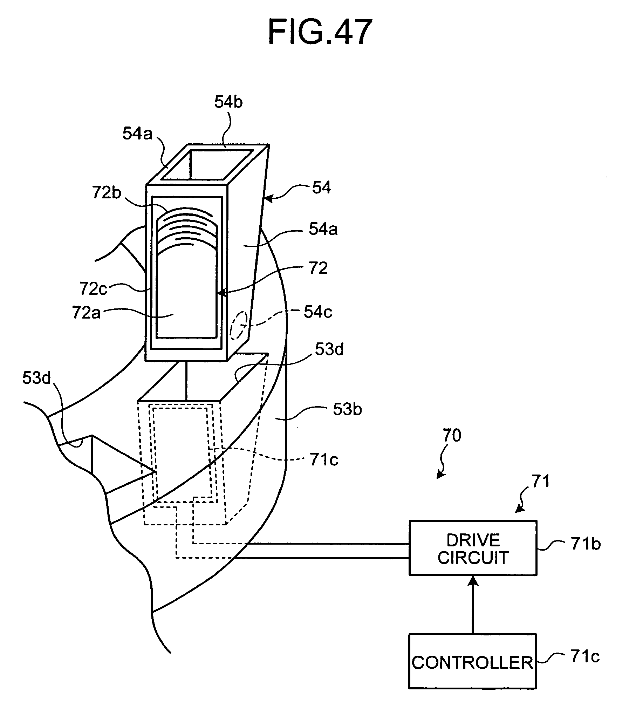

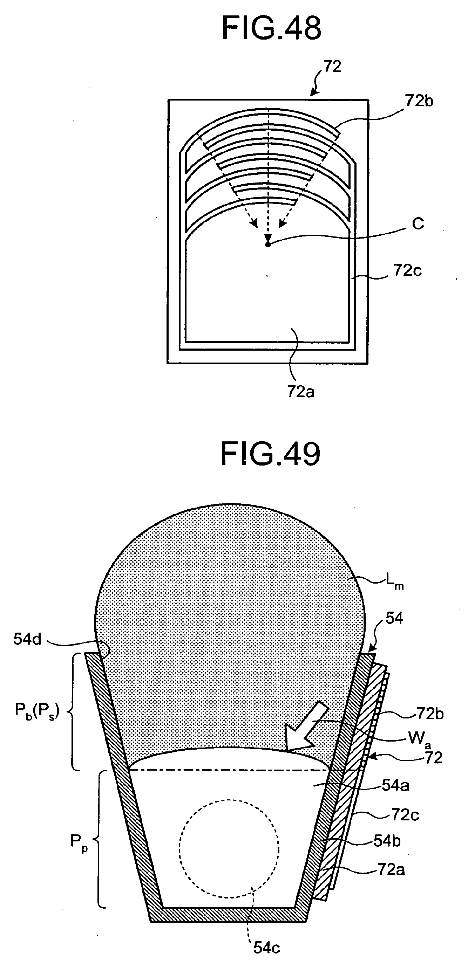

(Third Embodiment)
Next, a third embodiment of a reaction vessel and an analyzer of the present invention will be described in detail with reference to the drawings. Although the analyzer of the second embodiment forms the liquid holding unit for holding the liquid by allowing the reaction wheel to abut the upper surface of the surface acoustic wave device, the analyzer of the third embodiment uses an independent reaction vessel. FIG. 46 is a schematic configuration diagram of an automatic analyzer according to the third embodiment of the present invention. FIG. 47 is an enlarged view of an A portion of the automatic analyzer shown in FIG. 46. FIG. 48 is a front view of a surface acoustic wave device used in the reaction vessel. FIG. 49 is a cross-sectional view showing a shape of the liquid dispensed in the reaction vessel at the dispensing holding unit (stirring holding unit).

An automatic analyzer 50 is provided with reagent tables 51 and 52, a reaction unit 53, a specimen vessel transferring mechanism 57, an analytical optical system 61, a cleaning mechanism 62, a control unit 64 and a drive device 70, as shown in FIGS. 46 and 47.

Each of the reagent tables 51 and 52 holds a plurality of reagent vessels 51a and 52a arranged in a peripheral direction, and is rotated by the drive means to convey the reagent vessels 51a and 52a in the peripheral direction, respectively, as shown in FIG. 46.

The reaction unit 53 has a lightproof member 53a and a cuvette wheel 53b, as shown in FIGS. 46 and 47. The lightproof member 53a is disposed on inner and outer sides in a radial direction of the cuvette wheel 53b, and an opening 53c for measuring light is formed thereon at a position intersecting with the analytical optical system 61. The cuvette wheel 53b holds the reaction vessels 54 in a plurality of concave portions 53d disposed along a peripheral direction (refer to FIG. 47) and rotates while keeping a temperature of the liquid in the reaction vessels 54 at around a body temperature. At this time, the cuvette wheel 53b rotates counterclockwise by (one revolution minus one cuvette)/4 per one cycle, and rotates clockwise by one reaction vessel 54 per four cycles. Also, in the cuvette wheel 53b, adjacent concave portions 53b are electromagnetically shielded. The reagent is dispensed from the reagent vessels 51a and 52a of the reagent tables 51 and 52 to the reaction vessels 54 by reagent dispensing mechanisms 55 and 56 disposed in the vicinity thereof. Herein, the reagent dispensing mechanisms 55 and 56 are provided with probes 55b and 56b for dispensing the reagent to arms 55a and 56a rotating in an arrow direction on a horizontal surface, respectively, and have cleaning means (not shown) for cleaning the probes 55b and 56b by a cleaning water.

The reaction vessel 54 is shaped of a material, which transmits no less than 80% of light included in an analytical light (340 to 800 nm) emitted from the analytical optical system 61, for example, a glass including a heat-resistant glass, and a synthetic resin such as circular olefin, polystyrene, or the like. The reaction vessel 54 is a substantially square tubular vessel, which has a set of side walls 54a parallel to each other, and a set of slant side walls 54b outwardly slanting upward, for holding the liquid of a few nL to several tens of µL, as shown in FIG. 47. In the reaction vessel 54, a lower portion of the side wall 54a is used as a window 54c for measuring light, which transmits the analytical light, and a surface acoustic wave device 72 is attached to the slant side wall 54b through an acoustic matching layer (refer to Figs 47 and 49). Herein, in the reaction vessel 54, the non-affinity treatment for liquid such as specimen and reagent is performed on a region upper than an inner broken line to form the dispensing holding unit Pb (stirring holding unit Ps) as shown in FIG. 49, and the affinity treatment for liquid is performed on a lower region to form the light measuring holding unit Pp, and an opening 54d is formed on an upper portion. At this time, in the reaction vessel 54, an area of the dispensing holding unit Pb (stirring holding unit Ps) is made so as to be larger than an area of the opening 54d, and a position of the dispensing holding unit Pb (stirring holding unit Ps) for holding and stirring the dispensed liquid and a position of the light measuring holding unit Pp for measuring light of the liquid are different from each other. Also, in the light measuring holding unit Pp, the light path length of the held liquid is constantly defined by a set of side walls 54a.

A specimen vessel transferring mechanism 57 is transferring means for transferring a plurality of racks 59 arranged in a feeder 58 one by one along an arrow direction, and transfers the racks 59 while allowing the same to step, as shown in FIG. 46. The rack 59 has a plurality of specimen vessels 59a containing the specimen. Herein, in the specimen vessel 59a, the specimen is dispensed to the dispensing holding unit Pb of each of the reaction vessels 54 by the specimen dispensing mechanism 60 having an arm 60a and a probe 60b rotating in a horizontal direction, as the step of the racks 59, which are transferred by the specimen vessel transferring mechanism 57, stops. Therefore, the specimen dispensing mechanism 60 has the cleaning means for cleaning the probe 60b with the cleaning water.

The analytical optical system 61 is an optical system emitting and receiving the analytical light (340 to 800 nm) for analyzing the liquid specimen in the reaction vessel 54 in which the reagent and the specimen are reacted, and has a light emitting unit 61a, a light dispersing unit 61b and a right receiving unit 61c, as shown in FIG. 46. The analytical light emitted from the light emitting unit 61a penetrates the liquid specimen in the reaction vessel 54 and is received by the light receiving unit 61c disposed on a position opposing to the light dispersing unit 61b. The light receiving unit 61c is connected to the control unit 64.

The cleaning mechanism 62 sucks the liquid specimen in the reaction vessel 54 by a nozzle 62a and discharges the same, and after that, cleans the reaction vessel 54 in which the analysis by the analytical optical system 61 is finished by repeatedly injecting and sucking the cleaning liquid or the like such as a cleaning material and the cleaning water by the nozzle 62a.

The control unit 64 controls an operation of each portion of the automatic analyzer 50, and at the same time, analyzes the constituent concentration or the like of the specimen based on the absorbance of the liquid specimen in the reaction vessel 54 based on the light volume emitted from the light emitting unit 61a and the light volume received by the light receiving unit 61c, and a microcomputer or the like is used, for example. The control unit 64 is connected to an input unit 65 such as a keyboard and a display unit 66 such as a display panel, as shown in FIG. 46.

The drive device 70 has an electrical transmitter 71 for transmitting electricity to the surface acoustic wave device 72, as shown in FIG. 47. The electrical transmitter 71 has an RF transmitting antenna 71a, a drive circuit 71b and a controller 71c, and the RF transmitting antenna 71a is arranged so as to be opposed to the surface acoustic wave device 72. The electrical transmitter 71 transmits the electricity supplied from a high-frequency AC source about a few MHz to some hundreds of MHz from the RF transmitting antenna 71a to the surface acoustic wave device 72 as a radio wave. At this time, the RF transmitting antenna 71a is attached to an inner surface of each concave portion 53d provided on the cuvette wheel 53b. Therefore, the drive device 70 changes to output the supplied electricity to a specific RF transmitting antennas 71a out of a plurality of RF transmitting antennas 71a by changing the same by means of a switch controlled by the controller 71c.

The surface acoustic wave device 72 is sound wave generating means, which is attached to the slant side wall 54b of the reaction vessel 54 through the acoustic matching layer made of an epoxy resin or the like, for stirring the liquid by the sound wave (elastic wave) and introducing or delivering the liquid to and from the holding unit 5a, and a transducer 72b formed of an interdigital transducer (IDT) and an antenna 72c are formed on a piezoelectric substrate 72a made of lithium niobate (LiNbO₃₎ or the like, as shown in FIGS. 47 and 48. Also, in the surface acoustic wave device 72, a plurality of circular-arc shaped combs of the interdigital transducer (IDT) composing the transducer 72b are arranged, and a plurality of combs are formed so as to be shorter toward a lower portion such that a center C (focus) of a plurality of combs is located vertically downward.

In the automatic analyzer 50 thus configured, the reagent dispensing mechanisms 55 and 56 sequentially dispense the reagent from the reagent vessels 51a and 52a to a plurality of reaction vessels 54, which are conveyed along the peripheral direction by the rotating cuvette wheel 53b. The specimen is sequentially dispensed from a plurality of specimen vessels 59a held in the rack 59 to the reaction vessels 54 to which the reagent is dispensed, by the specimen dispensing mechanism 60, under the control by the control unit 64. Also, the reaction vessels 54 to which the reagent and the specimen are dispensed are sequentially stirred by the drive device 70 and the reagent and the specimen react, every time the cuvette wheel 53b stops, and cross the analytical optical system 61 when the cuvette wheel 53b rotates again. At this time, light of a reaction liquid in the reaction vessel 54 is measured by the light receiving unit 61c and the constituent concentration or the like is analyzed by the control unit 64. The reaction vessel 54 in which the analysis is finished is cleaned by the cleaning mechanism 62, and after that, used again for analyzing the specimen.

At this time, when a content in the reaction vessel 54 is minute such as a few µL to some tens of µL, the opening through which the liquid is introduced becomes extremely narrow, and as a result, a mixed liquid Lm of the dispensed reagent and the specimen stays at the dispensing holding unit Pb (stirring holding unit Ps) and blocks the opening 54d on the upper portion, as shown in FIG.49. In such a case, the drive device 70 transmits the electricity from the RF transmitting antenna 71a of the electrical transmitter 71 to the antenna 72c out of contact under the control by the controller 71c. At this time, in the surface acoustic wave device 72, the interdigital transducer (IDT) composing the transducer 72d formed on the piezoelectric substrate 72a are concentrically arranged such that the center C (focus) is located vertically downward. Therefore, the transducer 72b of the surface acoustic wave device 72 emits the sound wave (elastic wave) converging to the center C (focus) downward, as indicated by an arrow of broken line in FIG. 48.

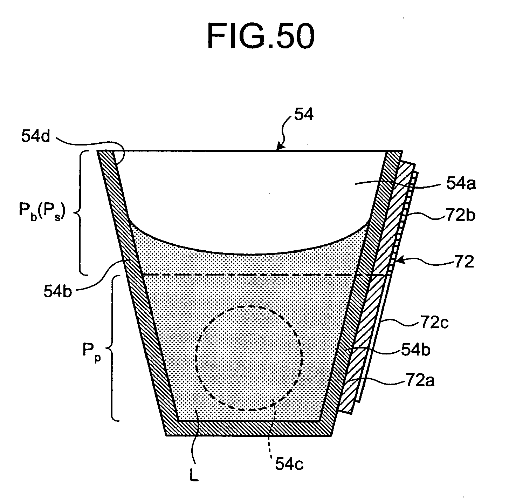

Therefore, the sound wave generated by the transducer 72b obliquely downwardly leaks from the inner wall surface of the reaction vessel 54 into the mixed liquid Lm as a sound wave Wa, as shown in FIG. 49. Due to the sound wave Wa thus leaking, an acoustic streaming and an acoustic radiation pressure toward obliquely downward are generated in the mixed liquid Lm, and the mixed liquid Lm is stirred in the dispensing holding unit Pb (stirring holding unit Ps) and the reaction of the reagent and the specimen is promoted. At this time, in the reaction vessel 54, the dispensing holding unit Pb also serves as the stirring holding unit Ps for stirring the liquid, and the position thereof and the position of the light measuring holding unit Pp for measuring light of the liquid are different from each other. Therefore, the reaction vessel 54 may dispense the liquid on the piezoelectric substrate 72a in the liquid drop state, so that this may easily dispense the liquid even when the volume of the liquid to be analyzed becomes minute and the vessel itself becomes minute accordingly. Also, the mixed liquid Lm has the gas-liquid interfaces on the upper and lower portions thereof, and the area of the gas-liquid interface is larger than the gas-liquid interface of a reaction liquid L shown in FIG. 50 held in the light measuring holding unit Pp, and an area contacting the side wall 54a and the slant side wall 54b of the reaction vessel 54 is smaller than that of the reaction liquid L shown in FIG. 50 held in the light measuring holding unit Pp. Therefore, the mixed liquid Lm is likely to flow due to the small friction with the side wall 54a and the slant side wall 54b, so that this may be sufficiently stirred with the high stirring efficiency even when the volume thereof is minute, thereby enabling the analysis correct and excellent in reliability.

Then, in the drive device 70 of the automatic analyzer 50, when the voltage to be applied to the transducer 72b by the controller 71c, accordingly, a drive energy of the transducer 72b, are made not smaller than a surface tension of the mixed liquid Lm, the mixed liquid Lm, which blocks the opening 54d, is conveyed toward the lower light measuring holding unit Pp while being stirred by the acoustic streaming and the acoustic radiation pressure generated by the sound wave Wa.

As a result, the mixed liquid Lm, which has blocked the opening 54d, finally finishes the reaction of the reagent and the specimen, and all of them is conveyed to the light measuring holding unit Pp as the reaction liquid L, as shown in FIG. 50. Meanwhile, although the transducer 72b also emits the sound wave upward, this is in a direction opposite to the center (converging) direction of the circular arc, so that the sound wave dissipates due to propagation. Therefore, the acoustic energy of the sound wave emitted upward from the transducer 72b becomes relatively small, so that it seems that only the sound wave emitted downward leaks into the reagent Lr. Meanwhile, the sound wave generated by lithium niobate in YZ cut is the elastic wave formed of the Rayleigh wave or the bulk wave concentrically propagating in the vicinity of the surface of the piezoelectric substrate 72a. In this embodiment, the bulk wave contributes to conveying and stirring.

The light of the reaction liquid L thus conveyed to the light measuring holding unit Pp is measured by the beam of light emitted from the analytical optical system 61. At this time, in the light measuring holding unit Pp, the light path length of the held liquid is constantly defined by a set of side walls 54a, so that a stable measurement result with regard to the reaction liquid L may be obtained. After that, the control unit 64 analyzes the constituent concentration or the like of the reaction liquid based on the light signal input from the light receiving unit 61c.

Herein, the reaction vessel in which the analysis is finished is generally cleaned by the cleaning mechanism 62 and is used again for analyzing the specimen. However, the reaction vessel 54 of which content is minute as a few µL to some tens of µL has the narrow opening 54d, so that an effect of the surface tension is larger than that of the reaction vessel of which content is large, and further, the surface acoustic wave device 72 is used for introducing the liquid. Therefore, the reaction vessel 54 is to be thrown away because it is difficult to discharge the liquid such as reaction liquid and cleaning liquid.

In this manner, in the reaction vessel 54 and the automatic analyzer 50 of the third embodiment, since the dispensing holding unit Pb for dispensing and holding the liquid is disposed on the portion different from that of the light measuring holding unit Pp of the reaction vessel 54, this may dispense the liquid on the piezoelectric substrate 72a in the liquid drop state, and may easily dispense the liquid to the reaction vessel 54, even when the volume of the liquid to be analyzed becomes minute and the reaction vessel 54 accordingly becomes minute. In addition, the reaction vessel 54 and the automatic analyzer 50 of the third embodiment hold the liquid in the stirring holding unit Ps formed on the position different from that of the light measuring holding unit Pp of the reaction vessel 54, and stirs the liquid while holding the area of the gas-liquid interface thereof so as to be larger than that held in the light measuring holding unit Pp at the time of measuring light, so that it is possible to sufficiently stir the liquid with the high stirring efficiency even when the volume thereof is minute, thereby enabling the analysis correct and excellent in reliability.

In the conventional analyzer, the liquid to be analyzed has been held in the reaction vessel in the same shape at the time of stirring and measuring light. However, since preferred shapes of the liquid to be analyzed are different at the time of stirring and measuring light, there has been a case in which the liquid did not sufficiently stirred with the conventional reaction vessel. Also, when the volume of the liquid to be analyzed has become minute because the volume of the specimen has become minute for reducing strain of patients and the volume of the reagent has become minute for reducing an analytical cost, the friction between the vessel wall surface and the liquid per unit volume has become relatively large, so that there has been a case in which the stirring further has become insufficient and the constituent concentration of the specimen could not be analyzed correctly.

However, according to the reaction vessel and the analyzer of the present invention, the liquid is stirred in a state in which the area of the gas-liquid interface of the liquid is held so as to be larger than that at the time of measuring light. Therefore, a contact area between the liquid at the time of stirring and the side wall of the reaction vessel is smaller than that at the time of measuring light. That is to say, in the reaction vessel of the present invention, the friction between the liquid and the side wall at the time of stirring is small, and the liquid easily flows. Therefore, the reaction vessel and the analyzer of the present invention have the effect that they sufficiently stir the minute volume of the held liquid, thereby enabling the analysis correct and excellent in reliability.

### INDUSTRIAL APPLICABILITY

As described above, the reaction vessel and the analyzer of the present invention are useful for performing the analysis correct and excellent in reliability even when the volume of the liquid to be analyzed is minute, and especially, suitable for being used in the automatic analyzer.

[Note]
Also, from the above-described embodiments, claims in the following additional statement and the invention in which claims are optionally combined may be extracted.

(Note 1)
An analyzer comprising:
a stirring unit for stirring a liquid held in a reaction vessel by means of a sound wave; and
a light measuring unit for irradiating the liquid which has been stirred, with light, and measuring optical characteristics of the liquid, wherein
the reaction vessel has a stirring holding unit for holding an area of a gas-liquid interface at the time of stirring the liquid so as to be larger than an area of a gas-liquid interface at the time of measuring light.

(Note 2)
The analyzer according to Note 1, wherein the reaction vessel has a light measuring holding unit for holding a whole of the liquid in a shape different from the shape at the time of stirring, when light of the liquid which has been stirred is measured.

(Note 3)
The analyzer according to Note 2, wherein the stirring holding unit is formed on a position different from a position of the light measuring holding unit.

(Note 4)
The analyzer according to Note 2, wherein the stirring holding unit is a surface of the stirring unit and a region having an affinity for the liquid higher than portions other than the stirring holding unit.

(Note 5)
The analyzer according to Note 2, wherein the light measuring holding unit has at least two openings opposing to each other.

(Note 6)
The analyzer according to Note 1, wherein the stirring unit has a transducer for generating a sound wave and for directly irradiating the liquid with the generated sound, and stirring.

(Note 7)
The analyzer according to Note 1, wherein the stirring unit is a surface acoustic wave device or a thickness-extensional vibrator.

(Note 8)
The analyzer according to Note 1, further including a conveying unit for conveying the liquid along a surface of the stirring unit.

(Note 9)
The analyzer according to Note 8, wherein the conveying unit conveys the liquid by means of a sound wave.

(Note 10)
The analyzer according to Note 8, wherein the conveying unit also serves as the stirring unit.

(Note 11)
The analyzer according to Note 1, further including a merging region for merging a specimen and a reagent on a position different from a position of the light measuring holding unit.

(Note 12)
The analyzer according to Note 11, wherein the merging region is formed on a surface of the stirring holding unit.

(Note 13)
An analytical method for irradiating a liquid stirred by means of a sound wave with light to measure optical characteristics of the liquid, the analytical method including stirring the liquid while an area of a gas-liquid interface thereof is held so as to be larger than that at the time of measuring light.

(Note 14)
A reaction vessel used in an analyzer for irradiating a liquid stirred by means of a sound wave with light to measure optical characteristics of the liquid, the reaction vessel including:
a stirring holding unit for holding the liquid when the liquid is stirred; and
a light measuring holding unit for holding the liquid when light of the liquid stirred in the stirring holding unit is measured, wherein
the stirring holding unit holds an area of a gas-liquid interface of the liquid at the time of stirring so as to be larger than an area of a gas-liquid interface of the liquid at the time of measuring the light.

## Claims

1. A reaction vessel comprising:
a dispensing holding unit for holding a dispensed liquid; and
a light measuring holding unit for holding the liquid conveyed from the dispensing holding unit, and having at least one set of parallel light transmission surfaces opposing to each other for constantly defining a light path length of light, the light path length being used for measuring optical characteristics of the liquid, wherein
the dispensing holding unit and the light measuring holding unit are formed on positions different from each other.

2. The reaction vessel according to claim 1, wherein the dispensing holding unit is a region other than a region on which the light measuring holding unit is formed in the reaction vessel.

3. The reaction vessel according to claim 1, wherein the light measuring holding unit has an opening through which the liquid pass when the liquid is introduced and delivered, and an area of the dispensing holding unit is larger than an area of the opening.

4. The reaction vessel according to claim 1, wherein relative positions of the dispensing holding unit and the light measuring holding unit are fixed.

5. The reaction vessel according to claim 1, wherein the dispensing holding unit and the light measuring holding unit come into contact with each other.

6. The reaction vessel according to claim 5, wherein the light measuring holding unit is enclosed by the dispensing holding unit.

7. The reaction vessel according to claim 1, wherein the dispensing holding unit and the light measuring holding unit move relative to each other, and come into contact with each other when optical characteristics of the liquid is measured.

8. An analyzer for stirring a liquid held in a vessel by a sound wave and measuring optical characteristics of the liquid which has been stirred, to analyze the liquid, comprising:
a dispensing unit for dispensing the liquid to a dispensing holding unit formed in the vessel; and
a light measuring unit for measuring optical characteristics of the liquid held in a light measuring holding unit to which the liquid which has been stirred is conveyed, a position of the light measuring unit in the vessel being different from a position of the dispensing holding unit.

9. The analyzer according to claim 8, further comprising a conveying unit for conveying the liquid in the vessel.

10. The analyzer according to claim 9, wherein the conveying unit conveys the liquid held in the dispensing holding unit to the light measuring holding unit.

11. The analyzer according to claim 10, wherein the conveying unit conveys all the liquid held in the dispensing holding unit to the light measuring holding unit.

12. The analyzer according to claim 9, wherein the conveying unit conveys the liquid held in the light measuring holding unit to the dispensing holding unit.

13. The analyzer according to claim 9, wherein the conveying unit conveys the liquid by means of a sound wave.

14. The analyzer according to claim 13, wherein the conveying unit is a surface acoustic wave device.

15. The analyzer according to claim 13, wherein the surface acoustic wave device also serves as a stirring unit for stirring the liquid.

16. The analyzer according to claim 9, wherein in the vessel, a surface contacting the liquid at the time of dispensing, conveying and measuring light of the liquid has an affinity for the liquid, which is higher than an affinity of a surface other than a portion which the liquid contacts.
